(19) Europäisches Patentamt
European Patent Office
Office européen des brevets

(11) Publication number: **0 634 439 A1**

(12) **EUROPEAN PATENT APPLICATION published in accordance with Art. 158(3) EPC**

(21) Application number: **94904757.5**

(22) Date of filing: **24.01.94**

(86) International application number: **PCT/JP94/00088**

(87) International publication number: **WO 94/17128 (04.08.94 94/18)**

(51) Int. Cl.6: **C08J 3/12**, B29B 9/06, B29B 9/12, B29B 13/06

(30) Priority: **29.01.93 JP 14190/93**
**29.01.93 JP 14191/93**
**29.01.93 JP 14197/93**
**29.01.93 JP 14198/93**
**29.01.93 JP 14200/93**
**29.01.93 JP 14293/93**

(43) Date of publication of application: **18.01.95 Bulletin 95/03**

(84) Designated Contracting States: **DE FR GB IT NL**

(71) Applicant: **MITSUI PETROCHEMICAL INDUSTRIES, LTD.**
**2-5, Kasumigaseki 3-chome**
**Chiyoda-ku**
**Tokyo 100 (JP)**

(72) Inventor: **OKABE, Masayuki, Mitsui Petrochemical Ind. Ltd.**
**1-2, Waki 6-chome**
**Waki-cho**
**Kuga-gun**
**Yamaguchi 740 (JP)**
Inventor: **SAKAI, Hideki, Mitsui Petrochemical Ind. Ltd.**
**1-2, Waki 6-chome**
**Waki-cho**
**Kuga-gun**
**Yamaguchi 740 (JP)**
Inventor: **TAKIMOTO, Kazuyuki, Mitsui Petrochem. Ind. Ltd.**
**1-2, Waki 6-chome**
**Waki-cho**
**Kuga-gun**
**Yamaguchi 740 (JP)**
Inventor: **KASAI, Tetsuji, Mitsui Petrochemical Ind. Ltd.**
**1-2, Waki 6-chome**
**Waki-cho**
**Kuga-gun**
**Yamaguchi 740 (JP)**
Inventor: **KAWATE, Takehiko, Mitsui Petrochemical Ind. Ltd.**
**1-2, Waki 6-chome**
**Waki-cho**
**Kuga-gun**
**Yamaguchiaguchi 740 (JP)**
Inventor: **WAKATSURU, Kenji, Mitsui Petrochemical Ind. Ltd.**
**1-2, Waki 6-chome**
**Waki-cho**
**Kuga-gun**
**Yamaguchiaguchi 740 (JP)**

(74) Representative: **Cresswell, Thomas Anthony**
**J.A. KEMP & CO.**
**14 South Square**
**Gray's Inn**
**London WC1R 5LX (GB)**

(54) **PELLET OF RANDOM CYCLOOLEFIN COPOLYMER AND PROCESS FOR PRODUCING THE SAME.**

(57) A pellet of a random cycloolefin copolymer composed of ethylene and a cyloolefin and having a softening point of 70 °C or above. 30 mg of the pellets contain sixty thousand or less of fine cyclohexane-insoluble



Rank Xerox (UK) Business Services
(3.10/3.09/3.3.4)

particles. The pellet can be produced by the method of feeding the powdery copolymer into an extruder after being heated to 50 °C or above, the method of using an extruder wherein the melting initiating end has the highest temperature that is at least 90 °C higher than the Tg of the copolymer, the method of conducting melt extrusion on a corotating twin-screw extruder, the method of filtering the extruded molten copolymer at a pressure difference of 90 $kg/cm^2$ or less, the method of reducing the amount of the fine powder generated in the step of, for example, drying the pellets below 100 ppm, or a combination of these methods.

Fig. 2

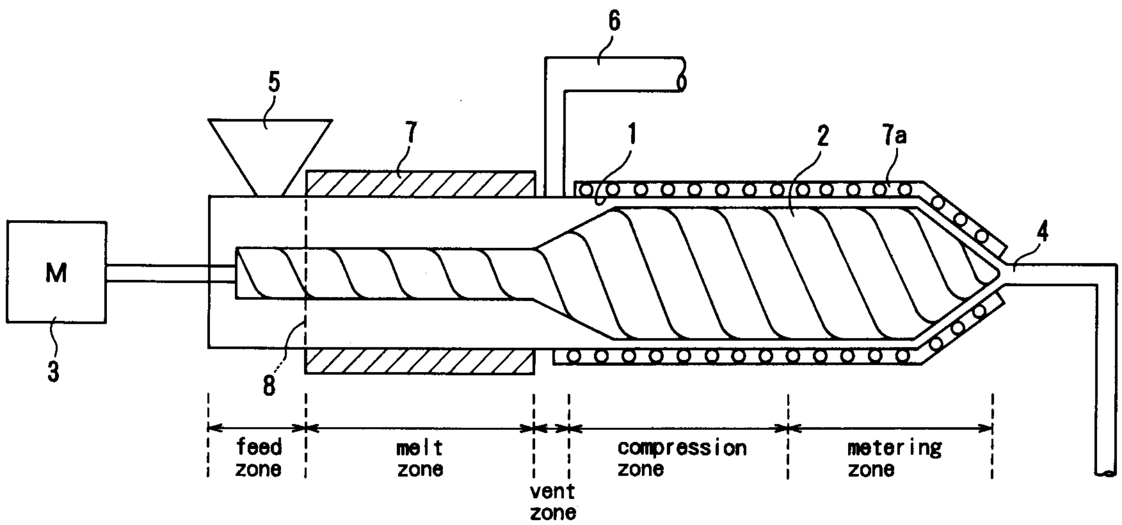

TECHNICAL FIELD

The present invention relates to cycloolefin random copolymer pellets and processes for preparing the same. More particularly, the invention relates to cycloolefin random copolymer pellets which can be molded into products specifically showing such high optical properties that the reading errors caused by an optical disc substrate can be reduced when the molded product is used as the optical disc substrate and that the transparency of a transparent film can be remarkably improved when the molded product is used as the film, and to processes for preparing the pellets having such properties.

BACKGROUND ART

The present applicant has proposed a variety of cycloolefin random copolymers formed from ethylene and specific cycloolefins, as described in, for example, Japanese Patent Laid-Open Publication No. 168708/1985 and specifications of Japanese Patent Applications No. 220550/1984, No. 236828/1984, No. 236829/1984 and No. 242336/1984. The cycloolefin random copolymers described in those publication and specifications not only shows excellent transparency and but also are excellent in various properties such as heat resistance, thermal aging resistance, chemical resistance, solvent resistance, dielectric properties and mechanical properties. Moreover, such cycloolefin random copolymers have good adhesion to substrates of various materials, though they are a kind of polyolefin. Accordingly, the cycloolefin random copolymers can be used, for example, in a field of optical materials such as optical memory discs and optical fibers, and a field of transparent containers and packaging materials such as transparent films and transparent containers.

The cycloolefin random copolymers are generally pelletized, and the resulting pellets are molded into optical disc substrates, etc. When optical discs are manufactured from the pellets, reading errors sometimes occur, though the errors are very few. Further, when transparent films are formed from the pellets, the transparency of the films is sometimes reduced, though the level of the reduction is very low. The present inventor has earnestly studied to reduce the reading errors of the optical discs manufactured from the cycloolefin random copolymer pellets and to enhance the transparency of the transparent films formed from the pellets, and as a result, they have found that these problems are partially caused by cyclohexane-insoluble fine particles contained in the cycloolefin random copolymer pellets.

The cyclohexane-insoluble fine particles contained in the pellets are rarely present in the cycloolefin random copolymer obtained immediately after the polymerization, and therefore the fine particles are presumably produced when the cycloolefin random copolymer is pelletized.

The present invention has been accomplished in view of the prior art techniques described as above, and it is an object of the invention to provide processes for preparing cycloolefin random copolymer pellets containing cyclohexane-insoluble cycloolefin random copolymer fine particles in an extremely small amount. More specifically, the object of the invention is to provide cycloolefin random copolymer pellets which can be molded into products showing such high optical properties that the reading errors caused by an optical disc substrate can be reduced when the molded product is used as the substrate and a transparency of prominently high level can be obtained when the molded product is used as a transparent film, and to provide processes for preparing such cycloolefin random copolymer pellets.

DISCLOSURE OF THE INVENTION

The cycloolefin random copolymer pellets according to the invention are cycloolefin random copolymer pellets obtained by copolymerizing (a) ethylene and (b) a cycloolefin represented by the following formula [I] or [II] and having a softening temperature (TMA) of not lower than 70 °C, in which not more than 60,000 of cyclohexane-insoluble cycloolefin random copolymer fine particles having a particle diameter of not less than 1 $\mu$m are contained per 30 mg of the pellets.

The first process for preparing cycloolefin random copolymer pellets according to the present invention is a process comprising feeding a cycloolefin random copolymer to an extruder, said copolymer being obtained by copolymerizing (a) ethylene and (b) at least one cycloolefin represented by the following formula [I] or [II] and having a softening temperature (TMA) of not lower than 70 °C, and extruding the cycloolefin random copolymer in the molten state from the extruder, wherein:

the cycloolefin random copolymer is preheated to a temperature of not lower than 50 °C, then fed to the extruder and pelletized.

In this invention, the cycloolefin random copolymer fed to the extruder is preheated to a temperature of not lower than 50 °C, and this copolymer may be a cycloolefin random copolymer powder substantially not

containing a solvent or may contain a solvent in an amount of not more than 20 % by weight.

The second process for preparing cycloolefin random copolymer pellets according to the present invention is a process comprising feeding a cycloolefin random copolymer to an extruder, said copolymer being obtained by copolymerizing (a) ethylene and (b) at least one cycloolefin represented by the following formula [I] or [II] and having a softening temperature (TMA) of not lower than 70 °C, and extruding the cycloolefin random copolymer in the molten state from the extruder, wherein:

the cycloolefin random copolymer is fed to the extruder whose cylinder temperature at the starting position of the melt zone is higher by not lower than 90 °C than the glass transition temperature (Tg) of the copolymer fed to the extruder and higher than other zones of the extruder, and pelletized.

The third process for preparing cycloolefin random copolymer pellets according to the present invention is a process comprising feeding a cycloolefin random copolymer to a twin-screw extruder, said copolymer being obtained by copolymerizing (a) ethylene and (b) at least one cycloolefin represented by the following formula [I] or [II] and having a softening temperature (TMA) of not lower than 70 °C, and extruding the cycloolefin random copolymer in the molten state from the twin-screw extruder, wherein:

the cycloolefin random copolymer is fed to the twin-screw extruder in which the rotation directions of the screws are the same as each other, and pelletized.

The fourth process for preparing cycloolefin random copolymer pellets according to the present invention is a process comprising feeding a cycloolefin random copolymer to an extruder, said copolymer being obtained by copolymerizing (a) ethylene and (b) a cycloolefin represented by the following formula [I] or [II] and having a softening temperature (TMA) of not lower than 70 °C, and extruding the cycloolefin random copolymer in the molten state from the extruder, wherein:

after melt extrusion of the cycloolefin random copolymer from the extruder, the molten copolymer is allowed to pass through a polymer filter while a difference in the pressure between before and behind the polymer filter is adjusted to not more than 90 $kg/cm^2$.

In this case, the cycloolefin random copolymer is preferably preheated to a temperature of not lower than 50 °C and then fed to the extruder.

The fifth process for preparing cycloolefin random copolymer pellets according to the present invention is a process comprising feeding a cycloolefin random copolymer to an extruder, said copolymer being obtained by copolymerizing (a) ethylene and (b) at least one cycloolefin represented by the following formula [I] or [II] and having a softening temperature (TMA) of not lower than 70 °C, and extruding the cycloolefin random copolymer in the molten state from the extruder, wherein:

the cycloolefin random copolymer pellets extruded from the extruder are dried and/or mixed in such a manner that the amount of a fine powder produced from the pellets in the drying and/or the mixing is not more than 100 ppm.

The sixth process for preparing cycloolefin random copolymer pellets according to the present invention is a process comprising feeding a cycloolefin random copolymer to an extruder, said copolymer being obtained by copolymerizing (a) ethylene and (b) at least one cycloolefin represented by the following formula [I] or [II] and having a softening temperature (TMA) of not lower than 70 °C, and extruding the cycloolefin random copolymer in the molten state from the extruder, wherein:

the cycloolefin random copolymer preheated to a temperature of not lower than 50 °C is fed to a twin-screw extruder in which the cylinder temperature at the starting position of the melt zone is set to be higher by not lower than 90 °C than the glass transition temperature (Tg) of the copolymer fed to the extruder, the temperature at the starting position of the melt zone is set to be higher than other zones of the extruder and the rotation directions of the two screws are the same as each other, then the copolymer is extruded in the molten state from the extruder, and thereafter the molten polymer is allowed to pass through a polymer filter while a difference in the pressure between before and behind the polymer filter is adjusted to not more than 90 $kg/cm^2$, and pelletized, followed by drying and/or mixing the cycloolefin random copolymer pellets in such a manner that the amount of a fine powder produced from the pellets is not more than 100 ppm.

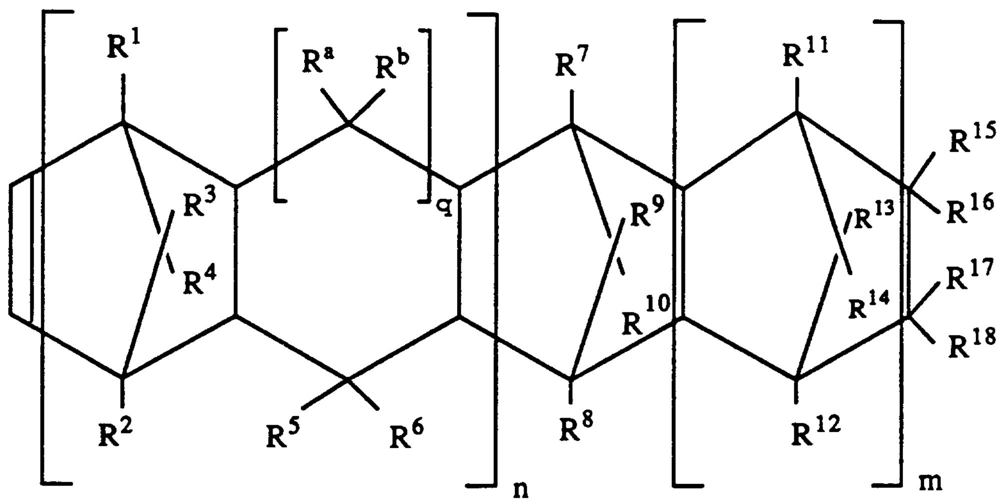

... [I]

wherein n is 0 or 1; m is 0 or a positive integer; q is 0 or 1; $R^1$ to $R^{18}$, and $R^a$ and $R^b$ are each independently an atom or a group selected from the group consisting of a hydrogen atom, a halogen atom and a hydrocarbon group; $R^{15}$ to $R^{18}$ may be bonded to each other to form a monocyclic or polycyclic ring which may have a double bond; and $R^{15}$ and $R^{16}$, or $R^{17}$ and $R^{18}$ may form together an alkylidene group.

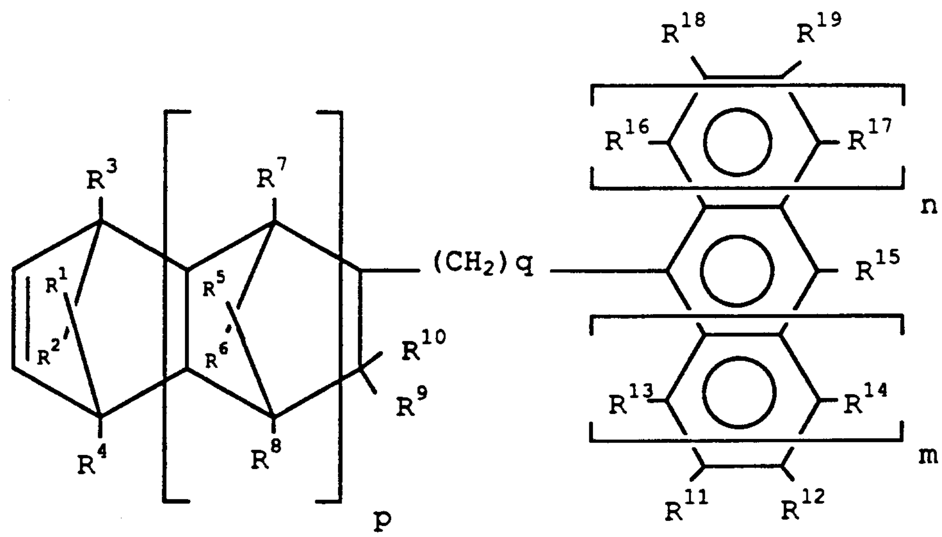

... [II]

wherein each of p and q is 0 or a positive integer; each of m and n is 0, 1 or 2; $R^1$ to $R^{19}$ are each independently a hydrogen atom, a halogen atom, a hydrocarbon group or an alkoxy group; a carbon atom to which $R^9$ or $R^{10}$ is bonded may be linked to either a carbon atom to which $R^{13}$ is bonded or a carbon atom to which $R^{11}$ is bonded directly or by way of an alkylene group of 1 to 3 carbon atoms; and when each of m and n is 0, $R^{15}$ and $R^{12}$, or $R^{15}$ and $R^{19}$ may be bonded to each other to form a monocyclic or polycyclic aromatic ring.

According to the present invention, pellets formed from a copolymer of ethylene and a cycloolefin are provided. The copolymer pellets contains only an extremely small amount of cyclohexane-insoluble cycloolefin random copolymer fine particles having a particle diameter of not less than 1 $\mu$m, and hence molded products produced from the pellets are excellent in the optical characteristics. For example, when a substrate of an optical disc is produced from the pellets, reading errors caused by the substrate can be reduced, and when a transparent film is produced from the pellets, the resulting film is markedly excellent

in the transparency.

When a resin is fed to an extruder and melted therein, melting of the resin is generally carried out by both of heat transferred from a cylinder which is heated and heat generated in accordance with a shear stress caused when the copolymer is caught by the screw.

However, if the cycloolefin random copolymer is preheated to a temperature of not lower than 50 °C as described above, the copolymer is already heated prior to application of the shear stress to the copolymer, and hence the copolymer smoothly becomes molten state in the extruder, whereby an excess of a shear stress is not applied to the cycloolefin random copolymer even by rotation of the screw in the extruder.

Further, the cylinder temperature is set to be higher than the glass transition temperature of the copolymer by not lower than 90 °C and set to be the highest in the molding machine, and thereby the cycloolefin random copolymer is melted mainly by the heat transferred from the heated cylinder. Accordingly, an excess shear stress is not applied to the cycloolefin random copolymer in the extruder.

Moreover, when the cycloolefin random copolymer pellets are prepared using a twin-screw extruder, the rotation directions of the screws are made the same as each other, and hence an excess shear stress is not applied to the cycloolefin random copolymer.

Furthermore, in the case where the molten cycloolefin random copolymer is filtered through a polymer filter (i.e., a filter for filtering the molten polymer) which is arranged at the tip of a nozzle of the extruder, and a difference in the pressure (differential pressure) applied to the copolymer between before and behind the polymer filter in the direction of flow is made not larger than a certain value, an excess shear stress is not applied to the copolymer when the copolymer passes through the polymer filter.

The cyclohexane-insoluble cycloolefin random copolymer fine particles are often formed from a fine powder produced when the cycloolefin random copolymer pellets are dried, or the copolymer pellets are mixed, and therefore the drying and/or the mixing of the pellets is operated in such a manner that the amount of the copolymer fine powder is not more than 100 ppm.

By virtue of such operation as described above, production of the cyclohexane-insoluble cycloolefin random copolymer fine particles having a particle diameter of not less than 1 µm can be inhibited when the copolymer pellets are prepared.

In the copolymer pellets prepared as above, a content of the cyclohexane-insoluble cycloolefin random copolymer fine particles having a particle diameter of not less than 1 µm is extremely low. Accordingly, the copolymer pellets are excellent in the optical properties, and hence when an optical disc substrate is produced from the pellets, reading errors caused by unevenness of the substrate can be reduced, and when a transparent film is formed from the pellets, a highly transparent film can be obtained.

## BRIEF DESCRIPTION OF THE DRAWINGS

Fig. 1 is a flow chart showing an example of the process for preparing copolymer pellets according to the present invention.

Fig. 2 is a schematic view showing an example of an extruder used in the process of the present invention.

Fig. 3 is a schematic view showing an example of a twin-screw extruder used in the process of the present invention.

Fig. 4 is a view showing interlocking of screws.

Description of symbols:

1, 11: cylinder
2, 12a, 12b: screw
3, 13: motor
4, 14: resin discharge opening
5, 15: hopper
6, 16: vent
7: heating means
7a: temperature adjusting means
8: starting position of melt zone

BEST MODE FOR CARRYING OUT THE INVENTION

The cycloolefin random copolymer pellets according to the present invention and the processes for preparing said pellets will be described in detail hereinafter.

The cycloolefin random copolymer pellets according to the invention are made from a copolymer of a cycloolefin represented by the following formula [I] or [II] and ethylene.

The number of cyclohexane-insoluble cycloolefin random copolymer fine particles having a particle diameter of not more than 1 µm contained in 30 mg of the cycloolefin random copolymer pellets is not more than 60,000, preferably not more than 50,000, more preferably not more than 30,000.

In the present invention, the number of the cyclohexane-insoluble cycloolefin random copolymer fine particles having a particle diameter of not less than 1 µm contained in the cycloolefin random copolymer pellets can be determined by dissolving the cycloolefin random copolymer pellets in cyclohexane in an amount of 3 g/liter, said cyclohexane containing not more than 200 fine particles having a particle diameter of not less than 1 µm per 10 ml of cyclohexane, and then counting the number of fine particles having a particle diameter of not less than 1 µm contained in the resultant polymer solution by means of a fine particle counter. In this determination, the number of the fine particles is counted by means of a fine particle counter (KL-01 type, produced by Lyon Co.) using a KS-60 type sensor.

The intrinsic viscosity [$\eta$] of the cycloolefin random copolymer pellets, as measured in decalin at 135 °C, is in the rang of usually 0.01 to 5 dl/g, preferably 0.1 to 3 dl/g, more preferably 0.2 to 2.5 dl/g.

The softening temperature (TMA) of the cycloolefin random copolymer pellets is not lower than 70 °C, preferably in the range of 70 to 250 °C, more preferably 80 to 200 °C, still more preferably 90 to 180 °C. The glass transition temperature (Tg) of the cycloolefin random copolymer pellets is in the range of usually 60 to 230 °C, preferably 70 to 190 °C.

The crystallinity of the cycloolefin random copolymer pellets, as measured by X-ray diffractometry, is in the range of usually 0 to 10 %, preferably 0 to 7 %, particularly preferably 0 to 5 %.

The cycloolefin random copolymer as described above contains recurring units derived from ethylene in an amount of usually 40 to 90 % by mol, preferably 50 to 85 % by mol, and contains recurring units derived from the cycloolefin represented by the formula [I] or [II] in an amount of usually 10 to 60 % by mol, preferably 15 to 50 % by mol. In the copolymer, the recurring units derived from ethylene and the recurring units derived from the specific cycloolefin are arranged at random and substantially linearly. The composition of the cycloolefin random copolymer (ethylene content and cycloolefin content in the copolymer) can be determined from the results obtained from $^{13}$C-NMR of the copolymer.

For preparing such cycloolefin random copolymer pellets of the invention as mentioned above, a copolymer of a cycloolefin represented by the following formula [I] or [II] and ethylene is first prepared.

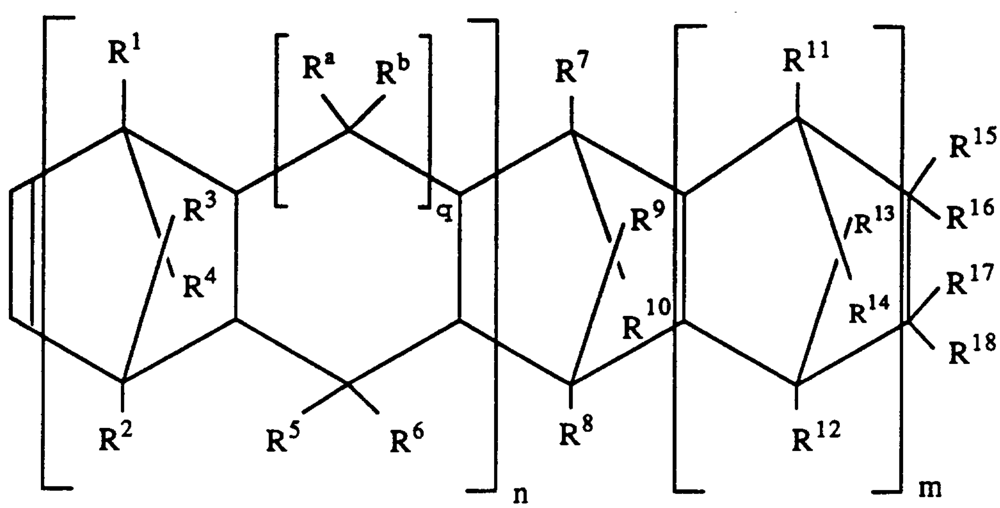

... [I]

In the above formula [I], n is 0 or 1, m is 0 or a positive integer, and q is 0 or 1. When q is 1, $R^a$ and $R^b$ are each independently the following atom or hydrocarbon group, and when q is 0, bonding hands are bonded to each other to form a five-membered ring.

In the formula [I], $R^1$ to $R^{18}$, and $R^a$ and $R^b$ are each independently a hydrogen atom, a halogen atom or a hydrocarbon group.

The halogen atom is a fluorine atom, a chlorine atom, a bromine atom or an iodine atom.

The hydrocarbon group is usually an alkyl group of 1 to 20 carbon atoms, a cycloalkyl group of 3 to 15 carbon atoms or an aromatic hydrocarbon group.

Examples of the alkyl group include methyl, ethyl, propyl, isopropyl, amyl, hexyl, octyl, decyl, dodecyl and octadecyl. These alkyl groups may be substituted with halogen atoms.

Examples of the cycloalkyl group include cyclohexyl.

Examples of the aromatic hydrocarbon group include phenyl and naphthyl.

In the above formula [I], $R^{15}$ and $R^{16}$, $R^{17}$ and $R^{18}$, $R^{15}$ and $R^{17}$, $R^{16}$ and $R^{18}$, $R^{15}$ and $R^{18}$, or $R^{16}$ and $R^{17}$ may be bonded to each other to form (in cooperation with each other) a monocyclic structure or a polycyclic structure. The thus formed monocyclic or polycyclic structure may have a double bond.

Examples of the monocyclic structure or the polycyclic structure formed herein include the following structures.

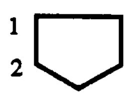
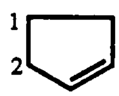
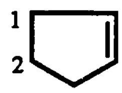
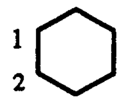
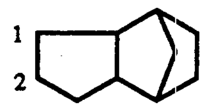

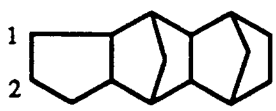
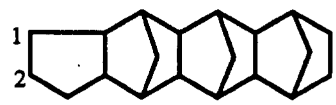

The carbon atoms numbered 1 and 2 in the above examples mean carbon atoms to which $R^{15}$ ($R^{16}$) and $R^{17}$ ($R^{18}$) are bonded, respectively, in the formula [I].

$R^{15}$ and $R^{16}$, or $R^{17}$ and $R^{18}$ may form together an alkylidene group. The alkylidene group is usually an alkylidene group of 2 to 20 carbon atoms. Examples of such alkylidene group include ethylidene, propylidene and isopropylidene.

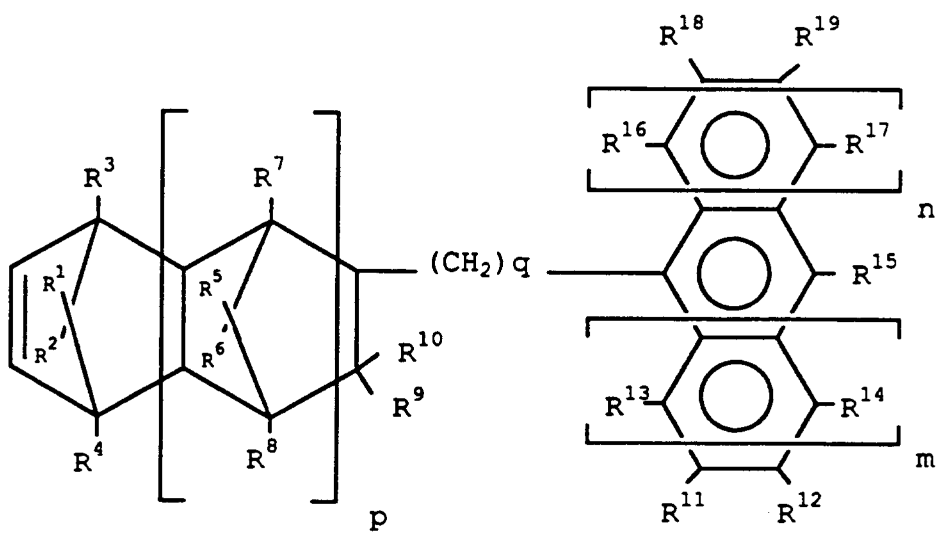

... [II]

In the above formula [II], each of p and q is 0 or a positive integer, and each of m and n is 0, 1 or 2.

$R^1$ to $R^{19}$ are each independently a hydrogen atom, a halogen atom, a hydrocarbon group or an alkoxy group. The halogen atom used herein is the same as the halogen atom in the aforementioned formula [I].

The hydrocarbon group is usually an alkyl group of 1 to 20 carbon atoms, a cycloalkyl group of 3 to 15 carbon atoms or an aromatic hydrocarbon group.

Examples of the alkyl group include methyl, ethyl, propyl, isopropyl, amyl, hexyl, octyl, decyl, dodecyl and octadecyl. These alkyl groups may by substituted with halogen atoms.

Examples of the cycloalkyl group include cyclohexyl.

Examples of the aromatic hydrocarbon group include an aryl group and an aralkyl group. More specifically, there can be mentioned phenyl, tolyl, naphthyl, benzyl and phenylethyl.

Examples of the alkoxy group include methoxy, ethoxy and propoxy.

A carbon atom to which $R^9$ or $R^{10}$ is bonded may be linked to either a carbon atom to which $R^{13}$ is bonded or a carbon atom to which $R^{11}$ is bonded directly or by way of an alkylene group of 1 to 3 carbon atoms. That is, when the above two carbon atoms are linked by way of an alkylene group, $R^9$ and $R^{13}$, or $R^{10}$ and $R^{11}$ forms in cooperation with each other any alkylene group of methylene ($-CH_2-$), ethylene ($-CH_2CH_2-$) and propylene ($-CH_2CH_2CH_2-$).

When each of m and n is 0, $R^{15}$ and $R^{12}$, or $R^{15}$ and $R^{19}$ may form a monocyclic or polycyclic aromatic ring in cooperation with each other. More specifically, examples of the aromatic ring formed from $R^{15}$ and $R^{12}$ when each of m and n is 0 are given below.

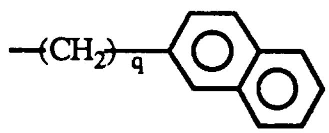

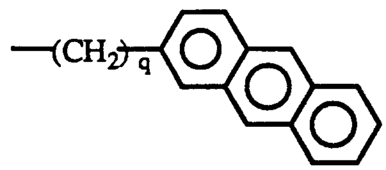

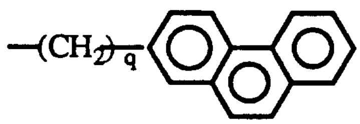

In the above formulas, q is the same as q in the formula [II].

Examples of the cycloolefin represented by the formula [I] or [II] include bicyclo-2-heptene derivatives (bicyclohept-2-ene derivatives), tricyclo-3-decene derivatives, tricyclo-3-undecene derivatives, tetracyclo-3-dodecene derivatives, pentacyclo-4-pentadecene derivatives, pentacyclopentadecadiene derivatives, pentacyclo-3-pentadecene derivatives, pentacyclo-3-hexadecene derivatives, pentacyclo-4-hexadecene derivatives, hexacyclo-4-heptadecene derivatives, heptacyclo-5-eicosene derivatives, heptacyclo-4-eicosene derivatives, heptacyclo-5-heneicosene derivatives, octacyclo-5-docosene derivatives, nonacyclo-5-pentacosene derivatives, nonacyclo-6-hexacosene derivatives, cyclopentadiene-acenaphthylene adducts, 1,4-methano-1,4,4a,9a-tetrahydrofluorene derivatives and 1,4-methano-1,4,4a,5,10,10a-hexahydroanthracene derivatives.

Listed below are particular examples of the cycloolefin represented by the formula [I] or [II].

The bicyclo[2.2.1]hept-2-ene derivatives such as

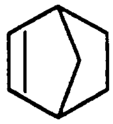

Bicyclo[2.2.1]hept-2-ene

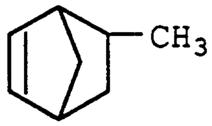

6-Methylbicyclo[2.2.1]hept-2-ene

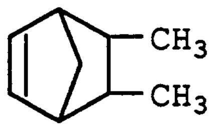

5,6-Dimethylbicyclo[2.2.1]-hept-2-ene

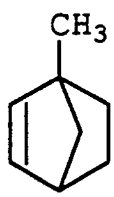

1-Methylbicyclo[2.2.1]hept-2-ene

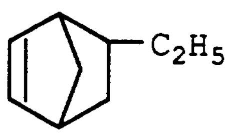

6-Ethylbicyclo[2.2.1]hept-2-ene

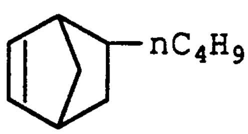

6-n-Butylbicyclo[2.2.1]hept-2-ene

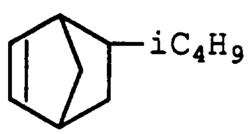

6-Isobutylbicyclo[2.2.1]hept-2-ene

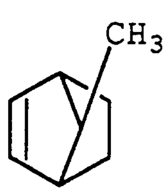

7-Methylbicyclo[2.2.1]hept-2-ene;

the tricyclo[4.3.0.1$^{2,5}$]-3-decene derivatives such as

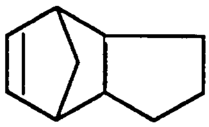

Tricyclo[4.3.0.1$^{2,5}$]-3-decene,

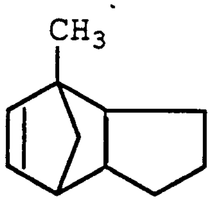

2-Methyltricyclo[4.3.0.1$^{2,5}$]-3-decene

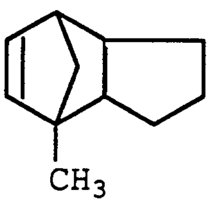

5-Methyltricyclo[4.3.0.1$^{2,5}$]-3-decene;

the tricyclo[4.4.0.1$^{2,5}$]-3-undecene derivatives such as

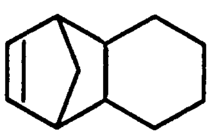

Tricyclo[4.4.0.1$^{2,5}$]-3-undecene

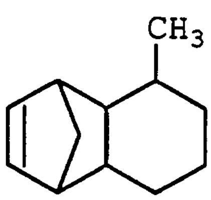

10-Methyltricyclo[4.4.0.1$^{2,5}$]-3-undecene;

the tetracyclo[4.4.0.1$^{2,5}$.1$^{7,10}$]-3-dodecene derivatives such as

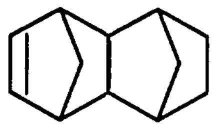

Tetracyclo[4.4.0.1^2,5.1^7,10]-3-dodecene,

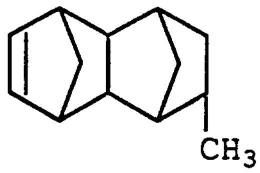

8-Methyltetracyclo [4.4.0.1^2,5.1^7,10]-3-dodecene

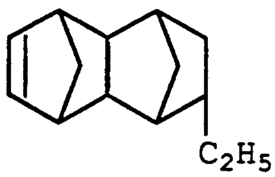

8-Ethyltetracyclo [4.4.0.1^2,5.1^7,10]-3-dodecene

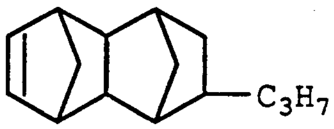

8-Propyltetracyclo [4.4.0.1^2,5.1^7,10]-3-dodecene

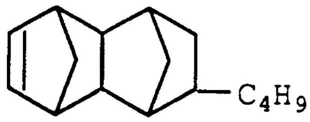

8-Butyltetracyclo $[4.4.0.1^{2,5}.1^{7,10}]$-3-dodecene

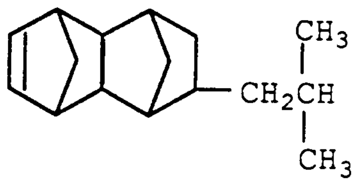

8-Isobutyltetracyclo-$[4.4.0.1^{2,5}.1^{7,10}]$-3-dodecene

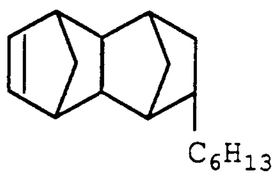

8-Hexyltetracyclo $[4.4.0.1^{2,5}.1^{7,10}]$-3-dodecene

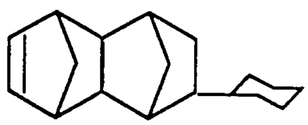

8-Cyclohexyltetracyclo-$[4.4.0.1^{2,5}.1^{7,10}]$-3-dodecene

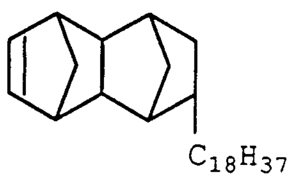

8-Stearyltetracyclo-$[4.4.0.1^{2,5}.1^{7,10}]$-3-dodecene

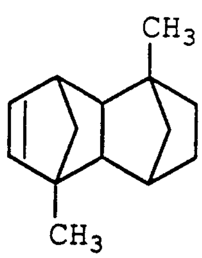

5,10-Dimethyltetracyclo-$[4.4.0.1^{2,5}.1^{7,10}]$-3-dodecene

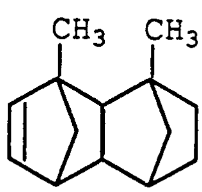

2,10-Dimethyltetracyclo-$[4.4.0.1^{2,5}.1^{7,10}]$-3-dodecene

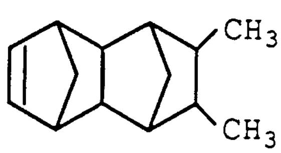

8,9-Dimethyltetracyclo-$[4.4.0.1^{2,5}.1^{7,10}]$-3-dodecene

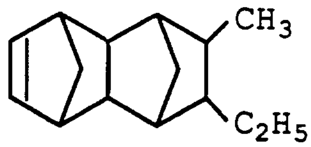

8-Ethyl-9-methyltetracyclo-$[4.4.0.1^{2,5}.1^{7,10}]$-3-dodecene

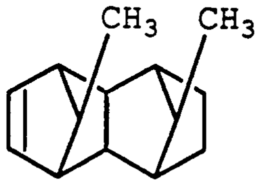

11,12-Dimethyltetracyclo-$[4.4.0.1^{2,5}.1^{7,10}]$-3-dodecene

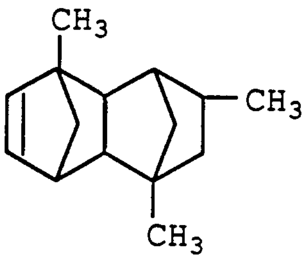

2,7,9-Trimethyltetracyclo-$[4.4.0.1^{2,5}.1^{7,10}]$-3-dodecene

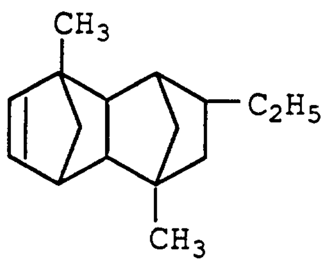

2,7-Dimethyl-9-ethyltetracyclo-$[4.4.0.1^{2,5}.1^{7,10}]$-3-dodecene

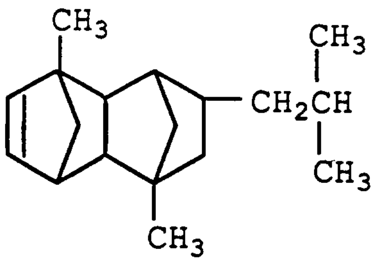

9-Isobutyl-2,7-dimethyltetracyclo-$[4.4.0.1^{2,5}.1^{7,10}]$-3-dodecene

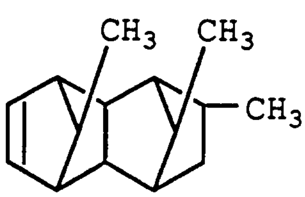

9,11,12-Trimethyltetracyclo-$[4.4.0.1^{2,5}.1^{7,10}]$-3-dodecene

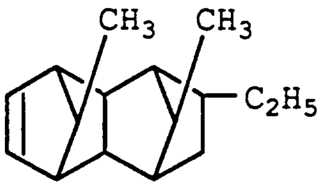

9-Ethyl-11,12-dimethyltetracyclo-$[4.4.0.1^{2,5}.1^{7,10}]$-3-dodecene

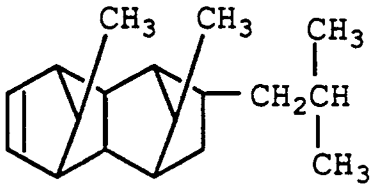

9-Isobutyl-11,12-dimethyltetracyclo-$[4.4.0.1^{2,5}.1^{7,10}]$-3-dodecene

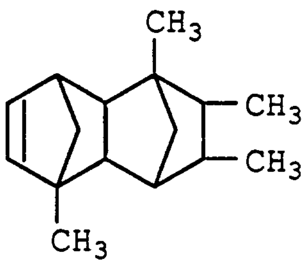

5,8,9,10-Tetramethyltetracyclo-$[4.4.0.1^{2,5}.1^{7,10}]$-3-dodecene

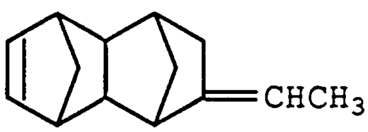

8-Ethylidenetetracyclo-$[4.4.0.1^{2,5}.1^{7,10}]$-3-dodecene

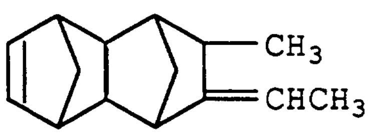

8-Ethylidene-9-methyltetracyclo-$[4,4,0,1^{2.5},1^{7.10}]$-3-dodecene

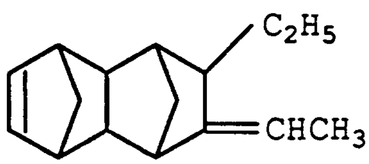

8-Ethylidene-9-ethyltetracyclo-$[4.4.0.1^{2,5}.1^{7,10}]$-3-dodecene

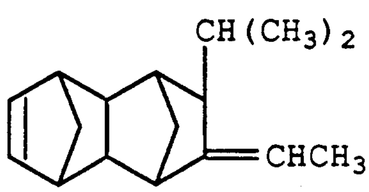

8-Ethylidene-9-isopropyltetracyclo-$[4.4.0.1^{2,5}.1^{7,10}]$-3-dodecene

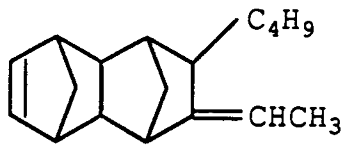

8-Ethylidene-9-butyltetracyclo-[4.4.0.$1^{2,5}$.$1^{7,10}$]-3-dodecene

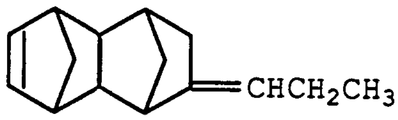

8-n-Propylidenetetracyclo-[4.4.0.$1^{2,5}$.$1^{7,10}$]-3-dodecene

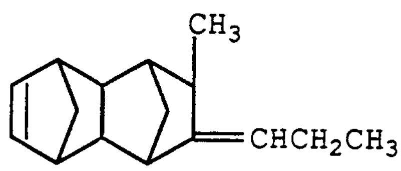

8-n-Propylidene-9-methyltetracyclo-[4.4.0.$1^{2,5}$.$1^{7,10}$]-3-dodecene

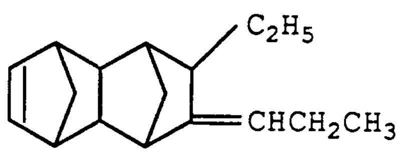

8-n-Propylidene-9-ethyltetracyclo-[4.4.0.$1^{2,5}$.$1^{7,10}$]-3-dodecene

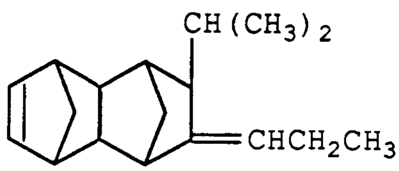

8-n-Propylidene-9-isopropyltetracyclo [4.4.0.$1^{2,5}$.$1^{7,10}$]-3-dodecene

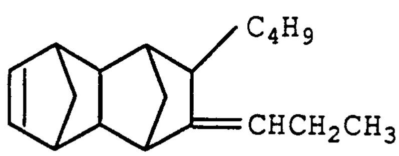

8-n-Propylidene-9-butyltetracyclo-[4.4.0.$1^{2,5}$.$1^{7,10}$]-3-dodecene

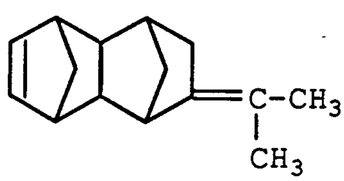

8-Isopropylidenetetracyclo-[4.4.0.$1^{2,5}$.$1^{7,10}$]-3-dodecene

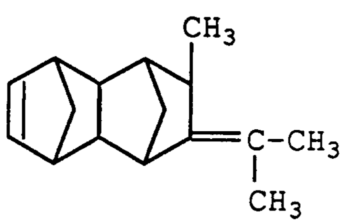

8-Isopropylidene-9-methyltetracyclo-[4.4.0.$1^{2,5}$.$1^{7,10}$]-3-dodecene

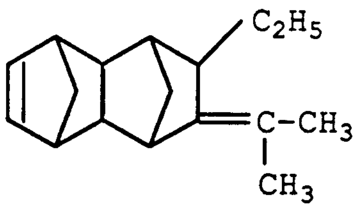

8-Isopropylidene-9-ethyltetracyclo-[4.4.0.$1^{2,5}$.$1^{7,10}$]-3-dodecene

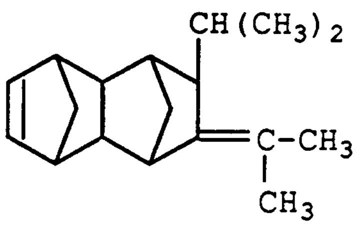

8-Isopropylidene-9-isopropyltetra-cyclo[4.4.0.$1^{2,5}$.$1^{7,10}$]-3-dodecene

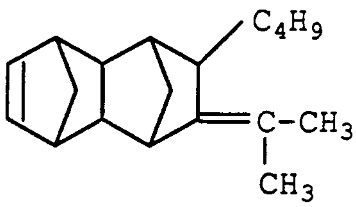

8-Isopropylidene-9-butyltetracyclo-[4.4.0.$1^{2,5}$.$1^{7,10}$]-3-dodecene;

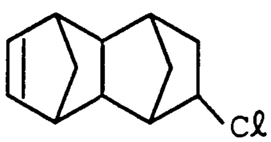

8-Chlorotetracyclo[4.4.0.$1^{2,5}$.$1^{7,10}$]-3-dodecene

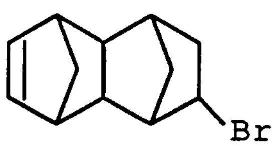

8-Bromotetracyclo[4.4.0.$1^{2,5}$.$1^{7,10}$]-3-dodecene

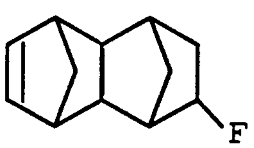

8-Fluorotetracyclo[4.4.0.$1^{2,5}$.$1^{7,10}$]-3-dodecene

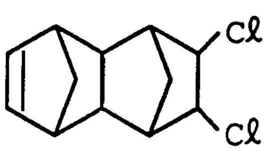

8,9-Dichlorotetracyclo-[4.4.0.$1^{2,5}$.$1^{7,10}$]-3-dodecene

the pentacyclo[6.5.1.$1^{3,6}$.$0^{2,7}$.$0^{9,13}$]-4-pentadecene derivatives such as

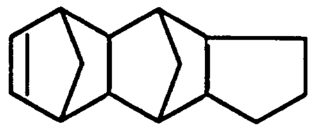

Pentacyclo[6.5.1.1$^{3,6}$.0$^{2,7}$.0$^{9,13}$]-4-pentadecene

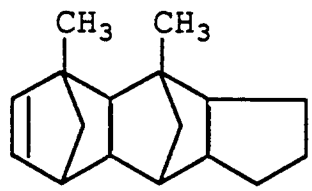

1,3-Dimethylpentacyclo-[6.5.1.1$^{3,6}$.0$^{2,7}$.0$^{9,13}$]-4-pentadecene

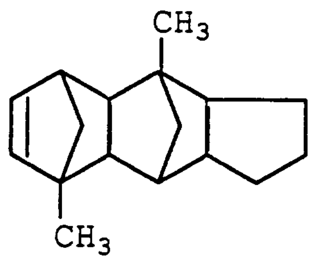

1,6-Dimethylpentacyclo-[6.5.1.1$^{3,6}$.0$^{2,7}$.0$^{9,13}$]-4-pentadecene

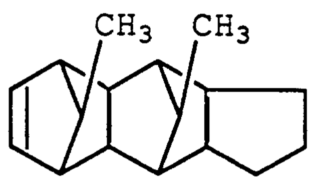

14,15-Dimethylpentacyclo[6.5.1.1$^{3,6}$.0$^{2,7}$.0$^{9,13}$]-4-pentadecene;

the pentacyclo[7.4.0.1$^{2,5}$.1$^{9,12}$.0$^{8,13}$]-3-pentadecene derivatives such as

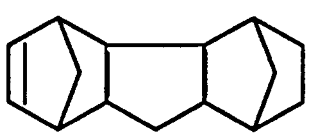

Pentacyclo[7.4.0.1$^{2,5}$.1$^{9,12}$.0$^{8,13}$]-3-pentadecene

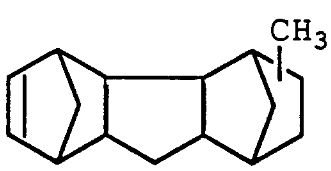

Methyl-substituted pentacyclo[7.4.0.1$^{2,5}$.1$^{9,12}$.0$^{8,13}$]-3-pentadecene;

the pentacyclopentadecadiene compounds such as

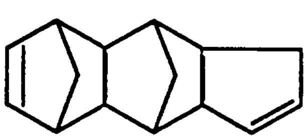

Pentacyclo[6.5.1.1$^{3,6}$.0$^{2,7}$.0$^{9,13}$]-4,10-pentadecadiene;

the pentacyclo[8.4.0.1$^{2,5}$.1$^{9,12}$.0$^{8,13}$]-3-hexadecene derivatives such as

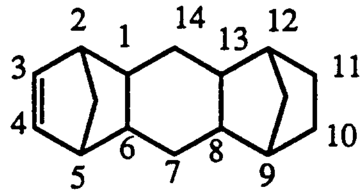

Pentacyclo [8.4.0.$1^{2,5}$.$1^{9,12}$.$0^{8,13}$]-3-hexadecene

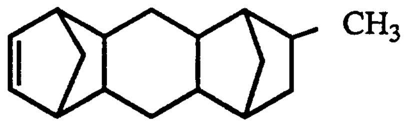

11-Methylpentacyclo [8.4.0.$1^{2,5}$.$1^{9,12}$.$0^{8,13}$]-3-hexadecene

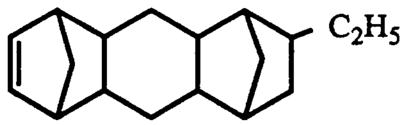

11-Ethylpentacyclo [8.4.0.$1^{2,5}$.$1^{9,12}$.$0^{8,13}$]-3-hexadecene

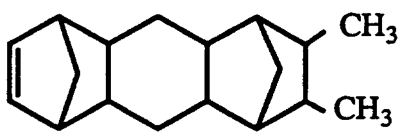

10,11-Dimethylpentacyclo [8.4.0.$1^{2,5}$.$1^{9,12}$.$0^{8,13}$]-3-hexadecene;

the pentacyclo[6.6.1.$1^{3,6}$.$0^{2,7}$.$0^{9,14}$]-4-hexadecene derivatives such as

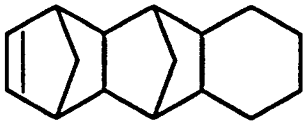

Pentacyclo [6.6.1.1$^{3,6}$.0$^{2,7}$.0$^{9,14}$]-4-hexadecene

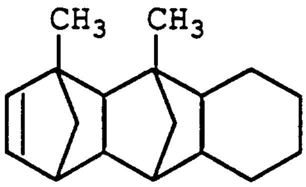

1,3-Dimethylpentacyclo-[6.6.1.1$^{3,6}$.0$^{2,7}$.0$^{9,14}$]-4-hexadecene

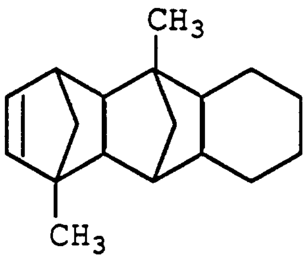

1,6-Dimethylpentacyclo-[6.6.1.1$^{3,6}$.0$^{2,7}$.0$^{9,14}$]-4-hexadecene

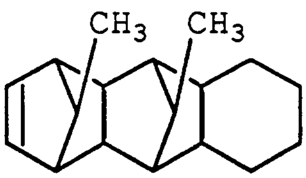

15,16-Dimethylpentacyclo-[6.6.1.1$^{3,6}$.0$^{2,7}$.0$^{9,14}$]-4-hexadecene;

the hexacyclo[6.6.1.1$^{3,6}$.1$^{10,13}$.0$^{2,7}$.0$^{9,14}$]-4-heptadecene derivatives such as

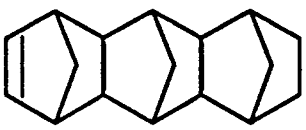

Hexacyclo [6.6.1.1$^{3,6}$.1$^{10,13}$.0$^{2,7}$.0$^{9,14}$] -4-heptadecene

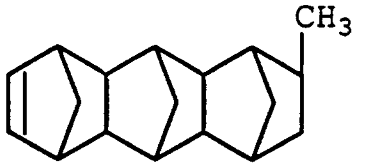

12-Methylhexacyclo $[6.6.1.1^{3,6}.1^{10,13}.0^{2,7}.0^{9,14}]$ -4-heptadecene

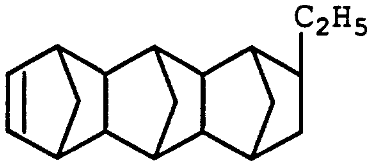

12-Ethylhexacyclo $[6.6.1.1^{3,6}.1^{10,13}.0^{2,7}.0^{9,14}]$ -4-heptadecene

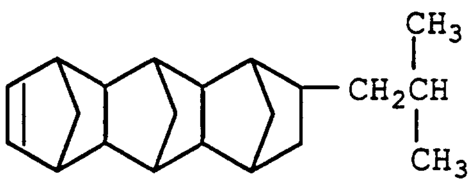

12-Isobutylhexacyclo $[6.6.1.1^{3,6}.1^{10,13}.0^{2,7}.0^{9,14}]$ -4-heptadecene

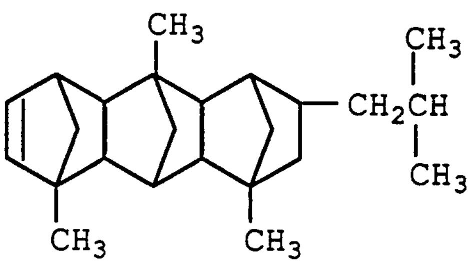

1,6,10-Trimethyl-12-isobutylhexacyclo $[6.6.1.1^{3,6}.1^{10,13}.0^{2,7}.0^{9,14}]$ -4-heptadecene;

the heptacyclo-5-eicosene derivatives such as

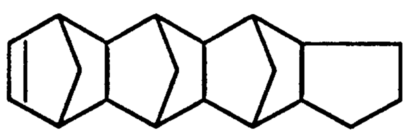

Heptacyclo$[8.7.0.1^{2,9}.1^{4,7}.1^{11,17}.0^{3,8}.0^{12,16}]$-5-eicosene;

the heptacyclo$[8.7.0.1^{3,6}.1^{10,17}.1^{12,15}.0^{2,7}.0^{11,16}]$-4-eicosene derivatives such as

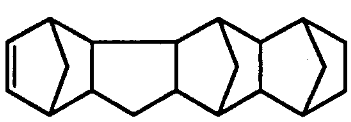

Heptacyclo$[8.7.0.1^{3.6}.1^{10,17}.1^{12,15}.0^{2,7}.0^{11,16}]$-4-eicosene

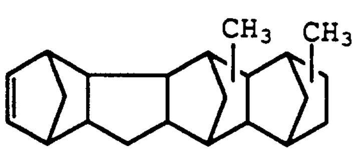

Dilmethyl-substituted heptacyclo-$[8.7.0.1^{3.6}.1^{10,17}.1^{12,15}.0^{2,7}.0^{11,16}]$-4-eicosene;

the heptacyclo-5-heneicosene derivatives such as

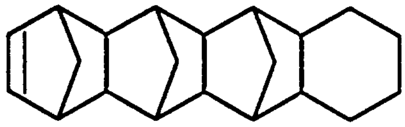

Heptacyclo[8.8.0.$1^{2,9}$.$1^{4,7}$.$1^{11,18}$.$0^{3,8}$.$0^{12,17}$]-5-heneicosene

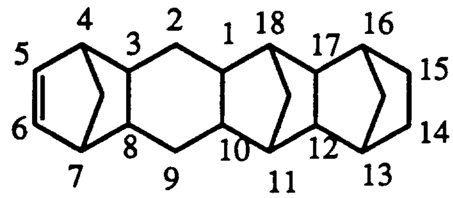

Heptacyclo [8.8.0.$1^{4,7}$.$1^{11,18}$.$1^{13,16}$.$0^{3,8}$.$0^{12,17}$]-5-heneicosene

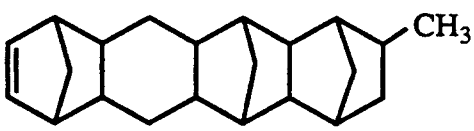

15-Methylheptacyclo [8.8.0.$1^{4,7}$.$1^{11,18}$.$1^{13,16}$.$0^{3,8}$.$0^{12,17}$]-5-heneicosene

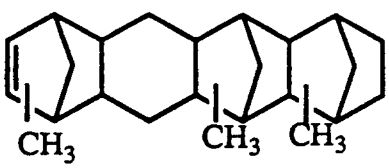

Trimethyl-substituted-heptacyclo [8.8.0.$1^{4,7}$.$1^{11,18}$.$1^{13,16}$.$0^{3,8}$.$0^{12,17}$]-5-heneicosene;

the octacyclo[8.8.0.$1^{2,9}$.$1^{4,7}$.$1^{11,18}$.$1^{13,16}$.$0^{3,8}$.$0^{12,17}$]-5-docosene derivatives such as

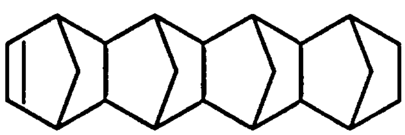

Octacyclo [8.8.0.$1^{2,9}$.$1^{4,7}$.$1^{11,18}$.$1^{13,16}$.$0^{3,8}$.$0^{12,17}$]-5-docosene

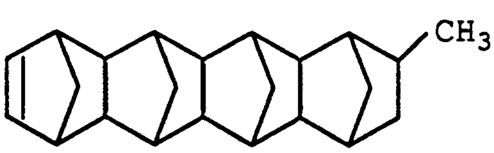

15-Methyloctacyclo [8.8.0.$1^{2,9}$.$1^{4,7}$.$1^{11,18}$.$1^{13,16}$.$0^{3,8}$.$0^{12,17}$]-5-docosene

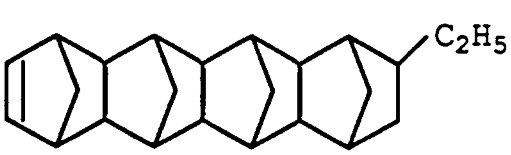

15-Ethyloctacyclo [8.8.0.$1^{2,9}$.$1^{4,7}$.$1^{11,18}$.$1^{13,16}$.$0^{3,8}$.$0^{12,17}$]-5-docosene;

the nonacyclo[10.9.1.$1^{4,7}$.$1^{13,20}$.$1^{15,18}$.$0^{2,10}$.$0^{3,8}$.$0^{12,21}$.$0^{14,19}$]-5-pentacosene derivatives such as

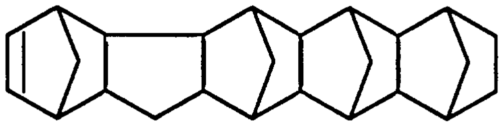

Nonacyclo[10.9.1.1$^{4,7}$.1$^{13,20}$.1$^{15,18}$.0$^{2,10}$.0$^{3,8}$.0$^{12,21}$.0$^{14,19}$]-5-pentacosene

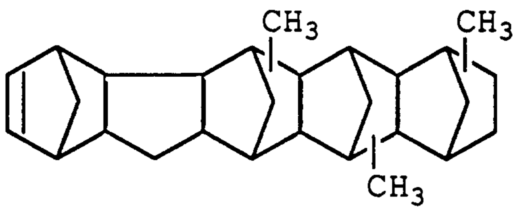

Trimethyl-substituted-nonacyclo-[10.9.1.1$^{4,7}$.1$^{13,20}$.1$^{15,18}$.0$^{2,10}$.0$^{3,8}$.0$^{12,21}$.0$^{14,19}$]-5-pentacosene

the nonacyclo [10.10.1.1$^{5,8}$.1$^{14,21}$.1$^{16,19}$.0$^{2,11}$.0$^{4,9}$.0$^{13,22}$.0$^{15,20}$]-6-hexacosene derivatives such as

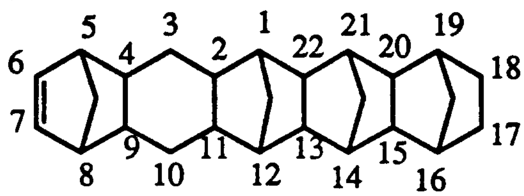

Nonacyclo[10.10.1.1$^{5,8}$.1$^{14,21}$1$^{16,19}$.0$^{2,11}$.0$^{4,9}$.0$^{13,22}$.0$^{15,20}$]-6-hexacosene

and furthermore,

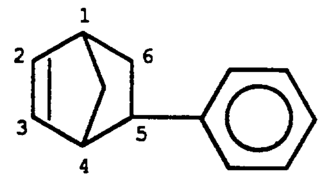

5-Phenyl-bicyclo[2.2.1]hept-2-ene

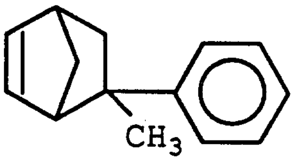

5-Methyl-5-phenyl-bicyclo[2.2.1]-hept-2-ene

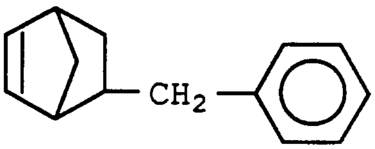

5-Benzyl-bicyclo[2.2.1]hept-2-ene

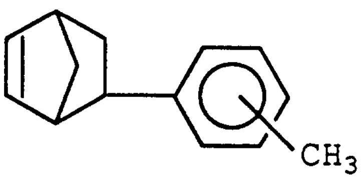

5-Tolyl-bicyclo[2.2.1]hept-2-ene

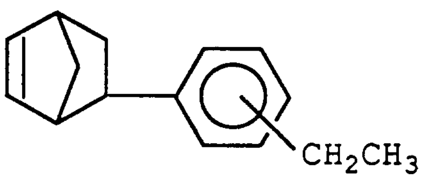

5-(Ethylphenyl)-bicyclo[2.2.1]hept-2-ene

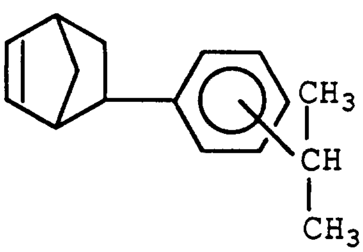

5-(Isopropylphenyl)-bicyclo[2.2.1]-hept-2-ene

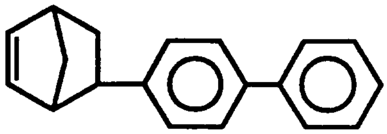

5-(Biphenyl)-bicyclo[2.2.1]hept-2-ene

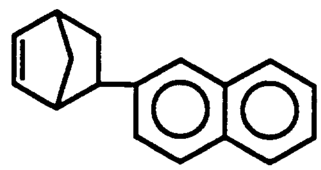

5-(β-Naphthyl)-
bicyclo[2.2.1]hept-2-ene

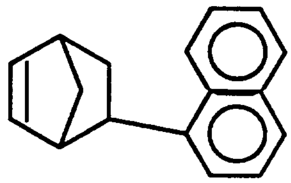

5-(α-Naphthyl)-
bicyclo[2.2.1]hept-2-ene

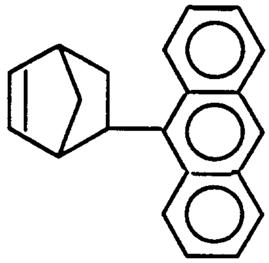

5-(Anthracenyl)-
bicyclo[2.2.1]hept-2-ene

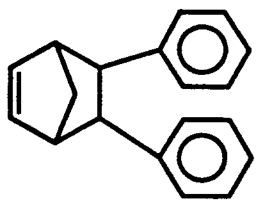

5,6-Diphenyl-bicyclo[2.2.1]
hept-2-ene

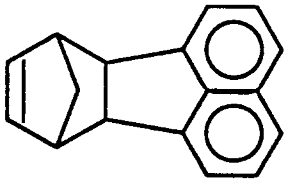

Cyclopentadiene-
acenaphthylene adducts

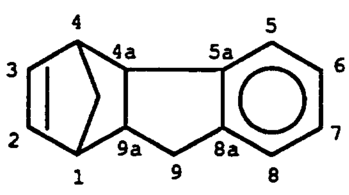

1,4-Methano-1,4,4a,9a-
tetrahydro-fluorene

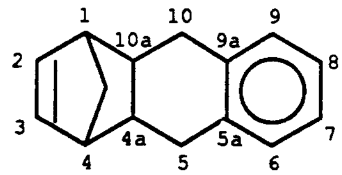

1,4-Methano-1,4,4a,5,10,10a-hexahydroanthracene

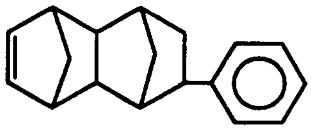

8-Phenyltetracyclo $[4.4.0.1^{2,5}.1^{7,10}]$-3-dodecene

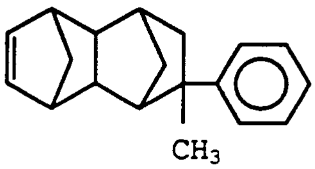

8-Methyl-8-phenyl-tetracyclo $[4.4.0.1^{2,5}.1^{7,10}]$-3-dodecene

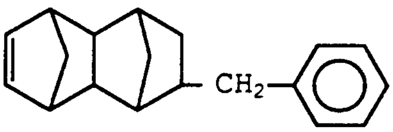

8-Benzyl-tetracyclo $[4.4.0.1^{2,5}.1^{7,10}]$-3-dodecene

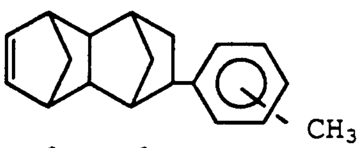

8-Tolyl-tetracyclo $[4.4.0.1^{2,5}.1^{7,10}]$-3-dodecene

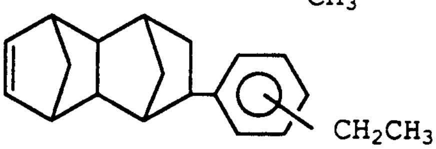

8-(Ethylphenyl)-tetracyclo $[4.4.0.1^{2,5}.1^{7,10}]$-3-dodecene

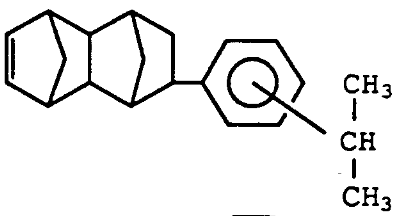

8-(Isopropylphenyl) tetracyclo$[4.4.0.1^{2,5}.1^{7,10}]$ -3-dodecene

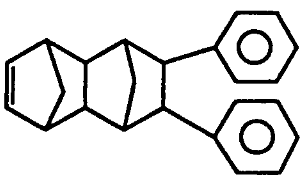

8,9-Diphenyl-tetracyclo $[4.4.0.1^{2,5}.1^{7,10}]$-3-dodecene

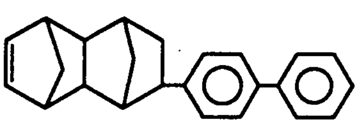

8-(Biphenyl)-tetracyclo $[4.4.0.1^{2,5}.1^{7,10}]$-3-dodecene

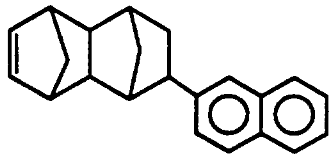

8-(β-Naphthyl)-tetracyclo $[4.4.0.1^{2,5}.1^{7,10}]$-3-dodecene

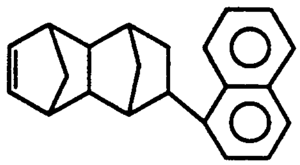

8-(α-Naphthyl)-tetracyclo $[4.4.0.1^{2,5}.1^{7,10}]$-3-dodecene

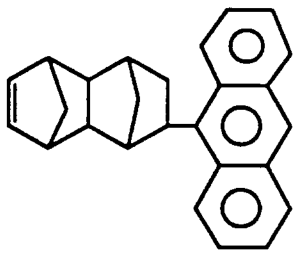

8-(Anthracenyl)-tetracyclo $[4.4.0.1^{2,5}.1^{7,10}]$-3-dodecene

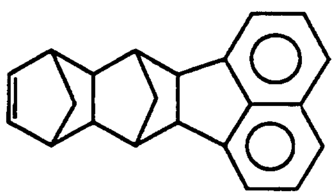

Compound of cyclopentadiene-acenaphthylene adducts with cyclopentadiene further added

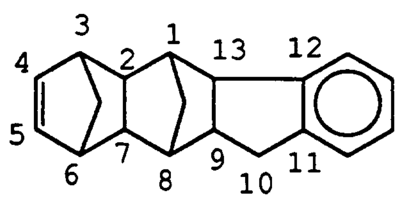

11,12-Benzo-pentacyclo $[6.5.1.1^{3,6}.0^{2,7}.0^{9,13}]$-4-pentadecene

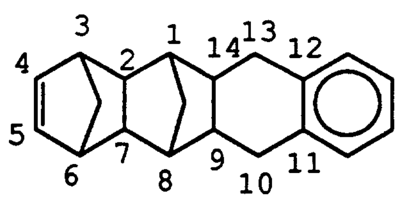

11,12-Benzo-pentacyclo $[6.6.1.1^{3,6}.0^{2,7}.0^{9,14}]$-4-hexadecene

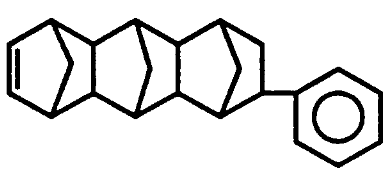

11-Phenyl-hexacyclo $[6.6.1.1^{3,6}.0^{2,7}.0^{9,14}]$-4-heptadecene

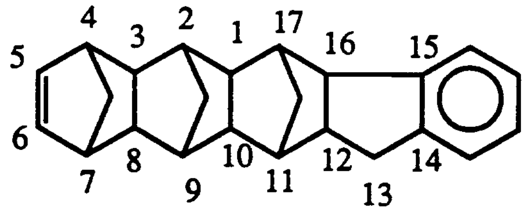

14,15-Benzo-heptacyclo [8.7.0.1$^{2,9}$.1$^{4,7}$.1$^{11,17}$.0$^{3,8}$.0$^{12,16}$]-5-eicosene

The cycloolefin random copolymer can be prepared by polymerizing ethylene and the above-mentioned cycloolefin in, for example, a hydrocarbon medium or a cycloolefin which is liquid at a reaction temperature in the presence of a catalyst (A) formed from a hydrocarbon-soluble vanadium compound and a halogen-containing organoaluminum compound, or a catalyst (B) formed from a transition metal or a lanthanoid compound of Group IV I having a cyclopentadienyl skeleton and an organoaluminum oxy-compound, and if necessary, an organoaluminum compound.

More specifically, for example, in a continuous polymerization apparatus, ethylene is polymerized with tetracyclo[4.4.0.1$^{2,5}$.1$^{7,10}$]-3-dodecene (hereinafter sometimes abbreviated to "TCD-3") as the cycloolefin in a cyclohexane medium using $VO(OCH_2CH_3)Cl_2/Al(CH_2CH_3)_{1.5}Cl_{1.5}$ as a catalyst under the conditions of a reaction temperature of 10 °C and a reaction time (retention time for polymerization reaction) of 30 minutes, to prepare an ethylene/TCD-3 random copolymer.

The cycloolefin random copolymer, which is a copolymer of the above-described cycloolefin and ethylene, contains recurring units derived from ethylene and recurring units derived from the cycloolefin as its essential constituent units. In addition, the copolymer may contain recurring units derived from other monomers copolymerizable with ethylene and the above-mentioned cycloolefin, with the proviso that the properties of the resulting copolymer are not marred.

The other monomers include olefins other than ethylene and the above-mentioned cycloolefins, and particular examples thereof include:

α-olefins of 3 to 20 carbon atoms, such as propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene and 1-eicosene;

cycloolefins, such as cyclobutene, cyclopentene, cyclohexene, 3,4-dimethylcyclopentene, 3-methylcyclohexene, 2-(2-methylbutyl)-1-cyclohexene, cyclooctene and 3a,5,6,7a-tetrahydro-4,7-methano-1H-indene;

norbornenes, such as 2-norbornene, 5-methyl-2-norbornene, 5-ethyl-2-norbornene, 5-isopropyl-2-norbornene, 5-n-butyl-2-norbornene, 5-isobutyl-2-norbornene, 5,6-dimethyl-2-norbornene, 5-chloro-2-norbornene and 5-fluoro-2-norbornene; and

non-conjugated dienes, such as 1,4-hexadiene, 4-methyl-1,4-hexadiene,5-methyl-1,4-hexadiene, 1,7-octadiene, dicyclopentadiene, 5-ethylidene-2-norbornene and 5-vinyl-2-norbornene.

These monomers can be used singly or in combination of two or more kinds.

In the cycloolefin random copolymer, the recurring units derived from such monomers as described above are contained in an amount of usually not more than 20 % by mol, preferably not more than 10 % by mol.

Processes for preparing cycloolefin random copolymers and catalysts used therefor have been already applied for patent, and the above-mentioned copolymer can be prepared under the appropriately selected conditions in accordance with the processes proposed by the present applicant as described in, for example, Japanese Patent Laid-Open Publications No. 168708/1985, No. 120816/1986, No. 115912/1986, No. 115916/1986, No. 271308/1986 and No. 272216/1986, and specifications of Japanese Patent Applications No. 95905/1986 and No. 95906/1986.

In the cycloolefin random copolymer, the cycloolefin represented by the formula [I] or [II] is presumed to form recurring units represented by the following formula [III] or [IV].

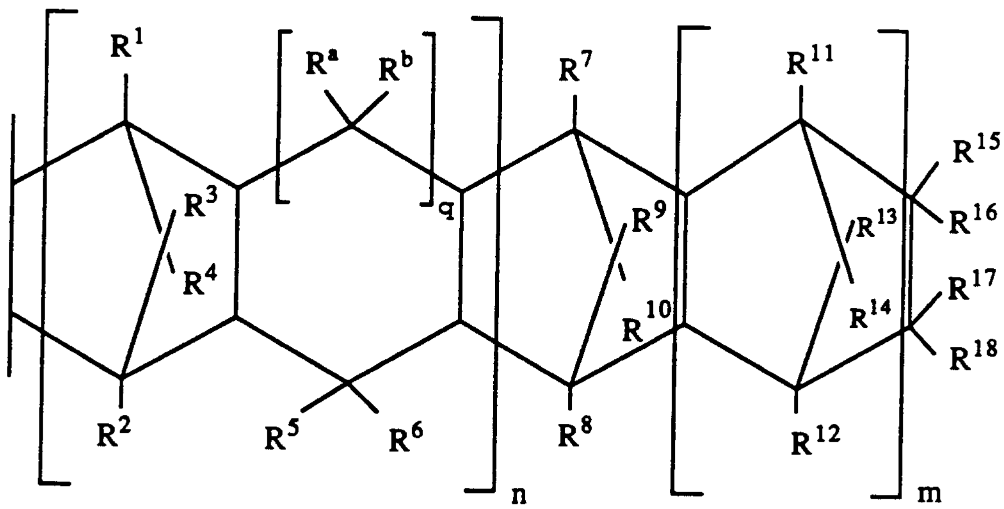

... [III]

wherein $R^1$ to $R^{18}$, $R^a$, $R^b$, m, n and q have the same meanings as defined in the formula [I].

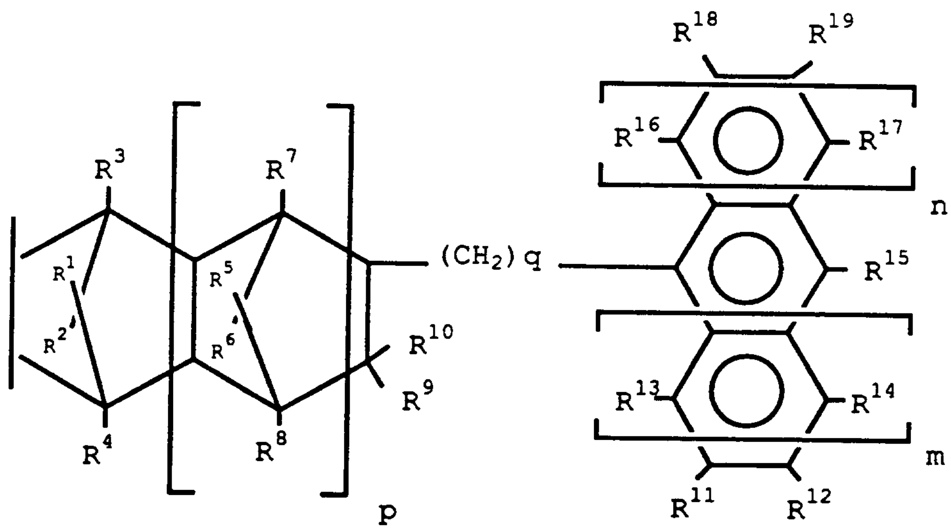

... [IV]

wherein $R^1$ to $R^{19}$, m, n, p and q have the same meanings as defined in the formula [II].

The quantity of the cyclohexane-insoluble fine particles having a particle diameter of not less than 1 $\mu$m contained in the cycloolefin random copolymer obtained immediately after the copolymerization is about 600/100 mg and is very small, so that these fine particles do not have any influence on the molded product. Accordingly, the cycloolefin random copolymer given immediately after the reaction does not substantially contain cyclohexane-insoluble cycloolefin random copolymer fine particles having a particle diameter of not less than 1 $\mu$m.

In the pelletization of the cycloolefin random copolymer melt extruded from the extruder, the copolymer is pelletized in such a manner that an excess of a shear stress is not applied to the copolymer, and if desired, the cyclohexane-insoluble cycloolefin random copolymer fine particles (hereinafter sometimes referred to "cyclohexane-insoluble fine particles") having a particle diameter of not more than 1 $\mu$m are removed by filtration through a polymer filter provided on the outlet side of the extruder, to prepare the cycloolefin random copolymer pellets of the invention. In more detail, the copolymer pellets can be prepared by, for example, preheating a powder of the copolymer or a concentrated solution of the copolymer to a temperature of not lower than the glass transition temperature (Tg) of the copolymer, melt

extruding the copolymer from an extruder, allowing the copolymer to pass through a polymer filter made of metallic nonwoven fabric and cutting the copolymer with a pelletizer. For reducing the quantity of the insoluble fine particles in the extruder, there can be used, for example, a method of preheating the copolymer powder or the concentrated solution of the copolymer fed to the extruder to a glass transition temperature (Tg) of the copolymer or thereabout, a method of sufficiently raising the temperature of the vent zone of the extruder, and a method of filtering the copolymer under such conditions that a difference in the pressure (differential pressure) between before and behind the polymer filter is not made so large, to enhance the filter efficiency of the polymer filter followed by extruding.

That is, the cyclohexane-insoluble fine particles having a particle diameter of not more than 1 μm contained in the cycloolefin random copolymer pellets of the invention are hardly present in the cycloolefin random copolymer obtained by the polymerization stage, as described above. Formation of the insoluble fine particles is presumably caused by an excess of a shear stress applied to the cycloolefin random copolymer when the copolymer powder prepared by the polymerization stage is melted and pelletized, and also caused by a fine powder produced when the cycloolefin random copolymer pellets are dried or mixed. Accordingly, the number of the insoluble fine particles contained in the cycloolefin random copolymer pellets or contained in the molded products produced from the pellets can be decreased by a method of selecting such conditions that an excess of a shear stress is not applied to the cycloolefin random copolymer when the cycloolefin random copolymer powder obtained by the polymerization stage is pelletized, further by a method of removing the produced insoluble fine particles by the use of a polymer filter, and still further by a method of conducting drying or mixing of the copolymer pellets in such a manner that a fine powder is not produced.

Hereinafter, the processes for preparing cycloolefin random copolymer pellets according to the invention outlined as above will be described in more detail.

For example, a reaction solution containing the cycloolefin random copolymer (copolymer solution) obtained by the polymerization step as described above is generally subjected to a series of steps comprising deashing, filtering, precipitation/filtering, extraction/filtering, drying and addition of stabilizer, as shown in Fig. 1, to prepare a cycloolefin random copolymer powder.

The deashing is a step for removing a catalyst dissolving in the copolymer solution. That is, after the above-mentioned polymerization reaction, the copolymer solution in which the cycloolefin random copolymer is dissolved is taken out of the reactor and deashed.

In this step, to the copolymer solution thus taken out are added hot water and a pH adjuster. The pH adjuster added herein is, for example, an aqueous solution of sodium hydroxide having a concentration of approx. 1 to 40 % by weight. By the addition of the hot water and the pH adjuster, the copolymerization reaction is terminated and the catalyst dissolved in the copolymer solution is extracted and transferred into the hot water side. The hot water into which the catalyst has been transferred is separated from the copolymer solution and the aqueous phase is removed, whereby the catalyst is removed from the cycloolefin copolymer.

The copolymer solution from which the catalyst was removed through the deashing step as described above was filtered again to further remove impurities contained in the copolymer solution.

In the copolymer solution thus filtered, the cycloolefin random copolymer is dissolved. The cycloolefin random copolymer dissolved in the copolymer solution can be precipitated by adding a precipitation solvent to the copolymer solution. The precipitation solvent used herein is a bad solvent for the cycloolefin random copolymer, and ketones such as acetone are usually employed as the solvent. In general, the precipitation solvent is added to the copolymer solution introduced into a precipitation drum having a stirrer and a baffle, and they are stirred and mixed in the drum.

The cycloolefin random copolymer which is precipitated by the addition of the precipitation solvent is separated from the solvent as a wet cake.

The wet cake thus separated is mainly a cycloolefin random copolymer, but it contains a small amount of impurities such as unreacted monomers. Therefore, the wet cake is dispersed again in a bad solvent (extraction solvent) for the cycloolefin random copolymer, such as acetone, to elute the impurities contained in the wet cake into the extraction solvent, so as to remove the impurities.

After elution of the impurities such as unreacted monomers, the extraction solvent is removed. Removal of the extraction solvent can be carried out by means of filtration, centrifugal separation, etc.

Even if the extraction solvent is removed as described above, however, the resulting copolymer still contains a small amount of the solvent, and therefore the cycloolefin random copolymer purified by the extraction is usually obtained in the form of a wet cake.

Accordingly, the wet cake is generally subjected to drying to remove the solvent. In this drying step, there can be used ordinary pressure drying and vacuum drying in combination. In general, the ordinary

pressure drying of the wet cake is performed by the use of an ordinary pressure dryer heated to a temperature of 100 to 190 °C. The period of time for the ordinary pressure drying is usually in the range of 5 to 60 minutes.

The vacuum drying is generally performed by the use of a vacuum dryer having been decompressed to the final pressure of 1 to 30 Torr and heated to 100 to 190 °C. The period of time for the vacuum drying is usually in the range of 1 to 4 hours.

Through the drying step, a powder of the cycloolefin random copolymer is obtained.

The cycloolefin random copolymer generally obtained in the form of a powder by, for example, the above process, has a softening temperature (TMA) of not lower than 70 °C, preferably 70 to 250 °C, more preferably 80 to 200 °C, still more preferably preferably 90 to 180 °C. In the present invention, the softening temperature (TMA) was determined by heat distortion behavior of a sample in the form of a sheet having a thickness of 1 mm using Thermo Mechanical Analyzer (produced by Du Pont). In detail, a quartz needle was put on the sheet, and the sheet was heated at a heating rate of 5 °C/min under a load of 49 g. The temperature at which the needle entered into the sheet by 0.635 mm was taken as the softening temperature (TMA).

The intrinsic viscosity [$\eta$] of the cycloolefin random copolymer, as measured in decalin at 135 °C, is in the range of usually 0.01 to 5 dl/g, preferably 0.1 to 3 dl/g, particularly preferably 0.2 to 2.5 dl/g. The glass transition temperature (Tg) of the cycloolefin random copolymer is in the range of usually 60 to 230 °C, preferably 70 to 190 °C.

The crystallinity of the cycloolefin random copolymer, as measured by X-ray diffractometry, is in the range of usually 0 to 10 %, preferably 0 to 7 %, particularly preferably 0 to 5 %.

To the cycloolefin random copolymer powder thus obtained is generally added a stabilizer prior to feeding the powder to an extruder.

The cycloolefin random copolymer powder obtained through the above-mentioned drying step does not substantially contain solvents, because the reaction solvent, the precipitation solvent, the extraction solvent, etc. are almost completely removed in the drying step.

In the first process for preparing cycloolefin olefin random copolymer pellets according to the invention, the cycloolefin random copolymer powder substantially not containing the solvents is preheated to a temperature not lower than 50 °C, preferably not lower than 80 °C, more preferably not lower than 80 °C and lower than the thermal decomposition temperature of the copolymer, prior to feeding the copolymer powder to an extruder. Accordingly, the first process involves two cases, that is, a case where the cycloolefin random copolymer is fed to the extruder in the form of a heated powder and a case where the cycloolefin random copolymer is fed to the extruder in the partially molten state.

The cycloolefin random copolymer can be heated to a predetermined temperature by various methods, for example, a method of fitting a jacket or a coil to the outside of a container such as a hopper, a silo or a drum and allowing a heating medium to pass through the jacket or the coil so as to heat the copolymer, and a method of fitting an induction heater or an electric heater to the container so as to directly heat the copolymer. When the copolymer is heated in the container as described above, it is preferred that stirring blades such as a paddle blade, a ribbon blade, a screw blade and a rotating shaft having a rod or a pin are provided inside the container and the copolymer is heated with stirring. The container itself may be rotated or vibrated to stir the cycloolefin random copolymer contained in the container.

The cycloolefin random copolymer can be also heated by blowing a gas (e.g., heated air or nitrogen gas) or water vapor directly into the copolymer contained in the container. Further, the cycloolefin random copolymer may be heated using infrared rays, microwave, etc.

In the first process of the invention, there can be utilized a method wherein the cycloolefin random copolymer is dissolved or suspended in a hydrocarbon solvent or a polar solvent (e.g., alcohols, ketones) and the resulting solution or the suspension is flashed under heating by means of a heat exchanger such as a double-tube heat exchanger, a multi-tube heat exchanger or a plate type heat exchanger to remove the solvent and to heat the copolymer, or a method wherein the solvent is vaporized using a thin film vaporizer to remove it and to obtain a preheated copolymer. When the heat exchanger or the thin film vaporizer is used, the coplymer should be given enough quantity of heat to completely vaporize the solvent and to heat the the resulting copolymer to the predetermined temperature.

In the first process of the invention, the cycloolefin random copolymer which has been heated to the predetermined temperature by, for example, the above-mentioned methods is fed to an extruder to prepare pellets.

Examples of the extruder used herein include conventionally known extruders such as a single-screw extruder, a twin-screw one-way extruder, a twin-screw two-way extruder and a planetary screw extruder.

An example of the extruder employable in the invention is shown in Fig. 2.

As shown in Fig. 2, the extruder employable in the invention includes a cylinder 1 which has a resin discharge opening 4 at the front end and a hopper 5 at the rear end and includes a screw 2 which is provided in the cylinder 1 and rotated by a power of a motor 3. In the vicinity of the center of the cylinder 1, a vent 6 is provided, and the vapor components in the cylinder 1 can be exhausted from the vent 6. The screw 2 is provided with helical thread, and the number of threads of this screw is generally 1 to 3.

In the cylinder 1 of the extruder, a temperature adjusting means 7, 7a is provided to heat or cool the copolymer powder fed to the extruder so as to control the temperature of the copolymer powder. As the temperature heating means 7, 7a, there can be used a means in which an electric heater or a cold water pipe is cast, a means in which a drill hole for flowing a heating medium therein is formed to adjust the temperature, a means in which a jacket for passing a heating medium therethrough is fixed on the outer wall of the cylinder, and an induction heater.

In Fig. 2, the temperature adjusting means 7 is generally a heating means, and the temperature adjusting means 7a is a means employable for both of heating and cooling.

The extruder having the above-mentioned structure can be sectioned, as shown in Fig. 2, into a feed zone for feeding the copolymer, a melt zone for heating and melting the copolymer fed, a vent zone provided with a vent, a compression zone for compressing the molten copolymer having passed through the vent zone and a metering zone for pushing the resin to a discharge opening. At the tip of the metering zone, a resin discharge opening is provided, and the copolymer discharged from the resin discharge opening in the molten state generally passes through a polymer filter and is then pelletized.

In the first process of the invention, the cycloolefin random copolymer preheated to the predetermined temperature is fed into the cylinder 1 of the extruder from the hopper 5. The cycloolefin random copolymer fed into the cylinder 1 advances in accordance with the rotation of the screw 2 and becomes molten for the most part owing to heat from the heating means 7 before the copolymer reaches the vent zone. Accordingly, the cycloolefin random copolymer in the molten state moves in the direction of the resin discharge opening 4 without hardly receiving a shear stress in the compression zone where the highest shear stress is conventionally applied to the copolymer, and hence cyclohexane-insoluble fine particles are hardly produced. In the preparation of pellets by feeding an ordinary resin to an extruder, the resin fed to the extruder is melted by both of heat from the heating means 7 and shear heat generated by the shear stress which is applied to the resin when the resin is contacted with the screw 2. It is presumed that, if the cycloolefin random copolymer is melted by utilizing the shear heat as described above, a relatively large shear stress is applied to the copolymer before the viscosity of the copolymer is reduced and the flowability thereof becomes good when the copolymer is varied from the solid state to the molten state, and hence the cyclohexane-insoluble fine particles are easily produced.

In this invention, the cycloolefin random copolymer is heated to a predetermined temperature and then fed to the extruder in the light of specificity of the cycloolefin random copolymer, so that the copolymer mostly becomes molten in the melt zone, and the cycloolefin random copolymer of high flowability to which a shear stress is hardly applied is fed to the subsequent vent zone, compression zone and metering zone. By virtue of such manner, production of the cyclohexane-insoluble fine particles is effectively inhibited.

The above-mentioned first process according to the invention is a process comprising heating a cycloolefin random copolymer which has been made powdery through the drying step to a predetermined temperature and feeding it to the extruder. In this first process of the invention, however, a solution or a dispersion of the cycloolefin random copolymer which is obtained prior to subjecting the drying step and contains a solvent can be used in place of the above-mentioned copolymer powder.

That is, there can be used in this process any of a copolymer solution obtained after removing the catalyst by the deashing step, a copolymer dispersion obtained after the precipitation/filtering step, and a copolymer dispersion obtained after the extraction/filtering step, among the steps consisting of polymerization step, deashing step, filtering step, precipitation/filtering step, extraction/filtering step, drying step and stabilizer adding step, as shown in Fig. 1. Further, a wet cake obtained by removing a part of the solvent from these dispersions can be also employed.

The cycloolefin random copolymer obtained through the above steps contains a solvent in a relatively large amount. In this invention, the copolymer is preheated to a temperature of not lower than 50 °C, preferably not lower than 80 °C, more preferably not lower than 80 °C and lower than the thermal decomposition temperature of the copolymer, without drying the copolymer, and then fed to the extruder. When the copolymer is fed to the extruder, the amount of the solvent remaining in the wet cake is preferably not more than 20 % by weight.

The process of the invention is further described below with reference to, for example, the case where the cycloolefin random copolymer solution obtained after the deashing step is used. The cycloolefin random copolymer after the deashing step is being dissolved or dispersed in a hydrocarbon solvent or a mixed

hydrocarbon solvent. Examples of the hydrocarbon solvents include aliphatic hydrocarbons such as pentane, hexane, heptane, octane, decane, dodecane and kerosine; halogen derivatives of these aliphatic hydrocarbons; alicyclic hydrocarbons such as cyclohexane, methylcyclopentane and methylcyclohexane; halogen derivatives of these alicyclic hydrocarbons; aromatic hydrocarbons such as benzene, toluene and xylene; and halogen derivatives of these aromatic hydrocarbons such as chlorobenzene.

In this process, it is preferred that the solvent or the dispersing medium is removed from the above-mentioned copolymer solution or dispersion so that the amount of the solvent or the dispersing medium becomes not more than 20 % by weight of the copolymer prior to feeding to the extruder.

For removing the solvent or the dispersing medium, there can be adopted a method of heating the copolymer solution or dispersion and flashing it so as to reduce the content of solution per the cycloolefin random copolymer to not more than 20 % by weight, and a method of adding a poor solvent for the cycloolefin random copolymer to the copolymer solution or dispersion whereby precipitating the cycloolefin random copolymer and perform phase separation so as to reduce the solvent concentration to not more than 20 % by weight. Further, centrifugal separation, filtration or other operation may be carried out in order to adjust the solvent content to not more than 20 % by weight. The cycloolefin random copolymer containing the solvent in an amount of not more than 20 % by weight which is obtained by the above methods is so-called wet cake. This wet cake is preheated to a temperature of not lower than 50 °C and directly fed to the extruder. For preheating the wet cake, the heating methods adopted for heating the aforesaid powder can be utilized. When the copolymer in the form of a solution is preheated, there can be used, in addition to the above methods, heat exchangers of double-tube type, multi-tube type, static mixer type and plate type. When the flashing method is used to remove the solvent, the temperature of the wet cake can be raised to not lower than 50 °C without heating the wet cake by setting the flashing temperature high. The wet cake thus prepared sometimes contains a cycloolefin monomer in a small amount.

The cycloolefin random copolymer wet cake preheated as described above is fed to the extruder and pelletized in a manner similar to that for the aforementioned powder.

However, if the wet cake, which contains a solvent, is extruded, the solvent is required to be removed in the extruder, and therefore the extruder is provided with a vent. The vent provided in this case is preferably one capable of efficiently removing the solvent. A multiple vent or a vacuum vent is preferred.

The above described is a process in which a solution or a dispersion obtained after the deashing step is used. A process in which a dispersion obtained after the precipitation/filtering step or the extraction/filtering step is used can be also carried out in a manner similar to the above process.

It is preferred that a stabilizer is added to the wet cake in any of the steps prior to feeding the wet cake to the extruder.

The second process of the invention is a process in which the cylinder temperature at the melt zone starting position 8, from which heating of the copolymer fed to the cylinder 1 from the hopper 5 of the feed zone in the extruder is initiated, is set to a temperature higher by not lower than 90 °C than the glass transition temperature (Tg) of the copolymer and pelletized. Further, the cylinder temperature at that position is preferably set within the range of a temperature higher than the Tg by 110 °C to a temperature lower than the thermal decomposition temperature of the copolymer by 10 °C.

In this process, furthermore, the cylinder temperature at the melt zone starting position is required to be set higher than cylinder temperatures in any of other zones, i.e., feed zone, vent zone, compression zone and metering zone.

The term "melt zone starting position 8" means a position from which heat transfer from the heating means 7 to the copolymer fed from the hopper 5 into the cylinder 1 is started and thereabout. Generally, it means the vicinity of the end of the heating means 7 on the side of the hopper 5.

By setting the temperature of the cylinder 1 as described above, the copolymer fed to the extruder smoothly becomes molten, and hence an excess of a shear stress is not applied to the copolymer even if the screw 2 is rotated, whereby the cyclohexane-insoluble fine particles are hardly produced in the extruder.

The number of rotations of the screw in the extruder is preferably within such a range that the powder fed to the extruder is completely melted in the bent zone, and within the range of 0.05 to 0.25 kwh/kg in terms of a specific energy. That is, the amount of the cycloolefin random copolymer processed based on the number of the screw rotations is preferably made large.

The first and second processes of the invention may be carried out by the use of conventionally-known extruders. When a twin-screw extruder is used, two screws of the extruder may or may not be interlocked with each other. Further, the rotation directions of the two screws may be the same or different from each other.

When a twin-screw extruder is used, however, the rotation directions of the two screws are preferably made the same as each other because the production of the insoluble fine particles can be effectively

inhibited.

That is, in the third process of the present invention, a twin-screw extruder having two screws which rotate in the same direction is used.

In Fig. 3, an example of the twin-screw extruder employable in the third process of the invention is shown.

As shown in Fig. 3, the twin-screw extruder used in the third process of the invention includes a cylinder 11 which has a resin discharge opening 14 at the front end and a hopper 15 at the rear end, and includes two screws 12a, 12b which are provided in the cylinder 11 and rotated by a power of a motor 13. These two screws 12a, 12b are connected with the motor 13 so as to rotate in the same direction. Owing to the rotation of the screws 12a, 12b in the same direction, the shear stress applied to the cycloolefin random copolymer is decreased, whereby the production of the cyclohexane-insoluble cycloolefin random copolymer fine particles is inhibited.

Though each of the screws of the twin-screw extruder has 1 to 3 threads, it is preferred to use a twin-screw extruder having single-thread screws or double-thread screws in the invention. By the use of such screws, the shear stress applied to the cycloolefin random copolymer can be reduced.

As shown in Fig. 4, the two screws are preferably arranged in such a manner that a channel of one screw and a thread of the other screw are engaged with each other, whereby the shear stress applied to the cycloolefin random copolymer can be reduced.

In the present invention, the specific power of the screw is preferably in the range of 0.05 to 0.25 kwh/kg. The channel depth is preferably made deep, and the ratio h/D given by the channel depth (h) and the screw diameter (D) is preferably in the range of 0.16 to 0.19, whereby the production of the cyclohexane-insoluble cycloolefin random copolymer fine particles is efficiently inhibited. The value of h/D is calculated from the channel depth (h) and the screw diameter (D) represented by using the same unit.

Many screws are generally provided with mixing segments such as kneading blocks and rotors, but in the invention, screws provided with no mixing segments are preferably employed.

In the twin-screw extruder as described above, the cycloolefin random copolymer is introduced from the hopper 15 into the feed zone of the cylinder 11. The copolymer introduced into the feed zone is transferred to the melt zone in accordance with the rotation of the screws 12a, 12b which rotate in the same direction. In this invention, the cycloolefin random copolymer is preferably preheated to a temperature of not lower than 50 °C prior to feeding it to the twin-screw extruder. More preferably, the copolymer is preheated to a temperature of not lower than 80 °C, particularly preferably not lower than 80 °C and lower than the decomposition temperature of the copolymer.

In the melt zone of the twin-screw extruder used in the invention, a heating means 17 is provided on the cylinder 1. As the heating means, there can be used a means in which an electric heater or a cold water pipe is cast, a means in which a drill hole for flowing a heating medium therein is formed to adjust the temperature, a means in which a jacket for passing a heating medium therethrough is fixed on the outer wall of the cylinder, and an induction heater. The copolymer transferred into the melt zone is heated to molten by the heating means.

The copolymer in the molten state then passes through the vent zone, the compression zone and the metering zone, and finally discharged from the resin discharge opening.

The cycloolefin random copolymer extruded from the extruder such as a single-screw extruder or a twin-screw extruder as described above is then filtered through a polymer filter arranged at the tip of a nozzle of the extruder.

In the fourth process of the invention, the molten cycloolefin random copolymer is filtered through a polymer filter in such a manner that a difference in the pressure (i.e., differential pressure) applied to the copolymer between before and behind the polymer filter when the copolymer passes through the polymer filter is not more than 90 $kg/cm^2$, preferably not more than 80 $kg/cm^2$, more preferably in the range of 5 to 60 $kg/cm^2$.

As the polymer filter used herein, there can be mentioned filters conventionally used for filtering molten resins. Examples of filter media for forming the polymer filter include metallic nonwoven fabric, sintered metal, metallic wire fabric and metallic wire mesh. Further, there can be used polymer filters of various types such as leaf disc type, tube type and pleat type. Examples of the filter media for forming the polymer filter include SUS304, SUS316, SUS316L, Hastelloy, Inconel, nickel, Carpenter and titanium.

The nominal diameter of the polymer filter is in the range of usually 1 to 200 $\mu m$, preferably 1 to 150 $\mu m$, more preferably 1 to 70 $\mu m$.

The polymer filter is arranged at the nozzle tip of the extruder. At the nozzle tip of the extruder, one polymer filter may be arranged, or plural polymer filters may be arranged.

The temperature of the polymer filter at the time when the molten cycloolefin random copolymer passes through the polymer filter is set in the range of usually a glass transition temperature (Tg) of the cycloolefin random copolymer + 100 °C to Tg + 250 °C, preferably Tg + 110 °C to Tg + 200 °C, more preferably Tg + 130 °C to Tg + 160 °C.

The cylinder temperature of the extruder at this time is in the range of usually Tg + 50 °C to Tg + 250 °C, preferably Tg + 70 °C to Tg + 200 °C, more preferably Tg + 80 °C to Tg + 160 °C.

By allowing the molten cycloolefin random copolymer to pass through the polymer filter at the predetermined differential pressure in the above-mentioned manner, the insoluble fine particles can be efficiently removed. Moreover, since an excess of a shear stress is not applied to the copolymer when the copolymer passes through the polymer filter, any insoluble fine particles are not newly formed when the copolymer passes through the polymer filter.

The cycloolefin random copolymer filtered through the polymer filter as described above is then pelletized into desirably shaped pellets.

There is no specific limitation on the shape and the size of the resulting copolymer pellets, and pellets of various shapes and sizes can be formed from the copolymer.

The copolymer pellets thus obtained are generally cooled by introducing them into water. As a result, water is attached to the pellets. For removing the water, accordingly, the obtained pellets are usually dried, and the pellets are sometimes mixed together.

In the fifth process for preparing the cycloolefin random copolymer pellets according to the invention, the pellets obtained by pelletizing the cycloolefin random copolymer are dried and/or mixed under mild conditions in such a manner that the amount of a fine powder produced from the cycloolefin copolymer pellets (a wear powder of the pellets, fragments of crushed pellets, etc.) becomes not more than 100 ppm. Particularly in the fifth process, the drying and/or the mixing of the pellets is carried out so that the amount of the fine powder becomes preferably not more than 60 ppm, more preferably not more than 20 ppm.

The cycloolefin random copolymer pellets prepared by the invention have a weight of approx. 0.01 to 0.03 g per one pellet, and the particle of the fine powder produced when the copolymer pellets are dried and/or mixed means a particle having a weight of not more than 1/5, preferably nor more than 1/10, more preferably not more than 1/20, as much as the weight of the pellet.

As the apparatus used for drying and/or mixing the pellets in the fifth process of the invention, there can be mentioned a powder drying apparatus and a powdering apparatus conventionally known. Particular examples of the apparatus include those of container-rotation type in which a container (e.g., horizontal cylindrical container, tilted cylindrical container, V-type container, double conical container, regular hexahedral container, S-shaped container, continuous V-type container) is rotated by a rotating shaft arranged horizontally to the container. In these container-rotation type apparatuses, the rotating shaft may be provided with a stirring blade, etc. Also employable in the fifth process of the invention are a mechanical stirring type apparatus in which a stirrer such as a ribbon, a screw, a conical screw, a rotating shaft having rod or pin, a paddle or a disc is fitted to the container perpendicularly or horizontally and the stirrer is rotated, a fluid stirring type apparatus in which air is flowed in a container, and an apparatus for stirring and mixing the pellets in which the pellets are taken out of the container and given back thereto again by means of an air transfer device, etc. Further, a static mixing apparatus for allowing the pellets to free-fall drop by gravity from the upper part of the container and an apparatus in which the pellets are dropped from various parts of the container at the same time to stir and mix the pellets can be also employed in the fifth process of the invention.

These apparatuses may have a vacuum device for drying the pellets, a device for blowing a gas such as air or nitrogen into the container, and a heating device using a jacket, a coil or a heating medium.

In the drying and/or the mixing of the cycloolefin random copolymer pellets by the use of the above-mentioned drying and/or mixing apparatuses in the fifth process of the invention, if the container rotation type apparatuses are used, the amount of the fine powder produced from the copolymer pellets can be reduced to not more than 100 ppm by making the rotation speed of the container as low as possible so that the pellets do not vigorously collides with each other or with the inner wall of the container. Otherwise, if the stirring type apparatuses are used, the amount of the fine powder can be reduced by making the stirring speed as low as possible so that an excess of a shear stress is not applied to the pellets when the stirrer is contacted with the pellets, or by making a gap between the stirring blade and the inner wall of the container as large as possible so that the shear stress is not applied to the pellets present in the gap even when the stirring blade is rotated. Further, there can be utilized a method of making the surface area of the stirring blade as small as possible so that the pellets are not strongly pushed onto the surface of the stirring blade or the inner wall of the container, and a method of making the shape of the stirring blade round or suitably adjusting the blade angle to allow the pellets to smoothly escape from the blade surface when the pellets

are contacted with the stirring blade.

When a container having a ribbon type stirrer which is vertically arranged is used, it is preferred that the helix angle of the ribbon is set in such a manner that the pellets are not pushed down in the direction of the bottom of the container but raised up in the direction of the top of the container by the stirring. That is, if the angle is set in such a manner that the pellets are pushed down, such a high pressure as pushes the pellets into the bottom of the container occurs, whereby an excess of a shear stress is sometimes applied to the pellets.

When the method of stirring the pellets by means of an air stream, the method of stirring the pellets by transferring and circulating them with air or the method of allowing the pellets to free-fall by gravity is utilized, the speed of air stream or the speed for transferring the pellets is made as low as possible so that the pellets are not brought into contact with the surface of the inner wall of the container at a high speed, whereby the shear stress applied to the pellets is reduced to the lowest.

Further, the amount of the pellets charged in the container is preferably made as small as possible. As a result, an excess of a shear stress caused by the pressure generated by the self-load of the pellets is not applied to the pellets present in the bottom of the container.

Moreover, the smoothness of the inner wall surface of the container and the surface of the stirring blade is preferably increased as highly as possible. In detail, it is desired that the inner wall surface of the container and the surface of the stirring blade are smoothed preferably by grinding them with a buff of #200 or more, more preferably by grinding them with a buff of #300 or more, particularly preferably by electropolishing them, to decrease the friction coefficients of the wall surface and the blade surface at the time when the pellets are contacted therewith, so as to reduce the shear stress applied to the pellets.

The cycloolefin random copolymer pellets can be prepared by adopting the above-mentioned first to fifth processes of the invention singly or in combination.

The sixth process of the present invention is the most preferred process among various combinations of the first to fifth processes.

That is, the sixth process of the invention is a process for preparing cycloolefin random copolymer pellets, comprising feeding a cycloolefin random copolymer to an extruder, said copolymer being obtained by copolymerizing (a) ethylene and (b) at least one cycloolefin represented by the aforesaid formula [I] or [II] and having a softening temperature (TMA) of not lower than 70 °C, and extruding the cycloolefin random copolymer in the molten state from the extruder, wherein:

the cycloolefin random copolymer preheated to a temperature of not lower than 50 °C is fed to a twin-screw extruder, similarly to the first process.

The twin screw-extruder used herein is the same extruder as used in the second process, and the screws of the extruder rotate in the same direction.

In this extruder, the cylinder temperature at the starting position of the melt zone is set to be higher by not lower than 90 °C than the glass transition temperature (Tg) of the copolymer fed to the extruder and higher than other zones of the extruder, as defined in the third process.

The cycloolefin random copolymer extruded from the extruder in the molten state is then allowed to pass through a polymer filter while a difference in the pressure between before and behind the polymer filter is adjusted to not more than 90 $kg/cm^2$, as defined in the fourth process.

The cycloolefin random copolymer pellets prepared as above are then dried and/or mixed in such a manner that the amount of a fine powder produced from the cycloolefin random copolymer pellets is not more than 100 ppm, as defined in the fifth process.

In the sixth process of the invention, ranges of the characteristic values, etc. can be defined by appropriately adopting the techniques of the first to fifth processes.

When the cycloolefin random copolymer pellets are prepared by the first to sixth processes of the invention as described above, the number of the cyclohexane-insoluble cycloolefin random copolymer fine particles having a particle diameter of not less than 1 µm contained in 30 mg of the cycloolefin random copolymer pellets can be made not more than 60,000, preferably not more than 50,000, more preferably not more than 30,000.

The cycloolefin random copolymer pellets of the invention can be used in a field of optical materials such as optical disc substrates and optical fibers, a field of transparent containers and packaging materials such as transparent films and transparent containers, etc. Particularly, the pellets of the invention have such properties that the cyclohexane-insoluble cycloolefin random copolymer fine particles having a particle diameter of not less than 1 µm are contained in only an extremely small amount, and hence they are especially suitable as molding materials for forming optical disc substrates which are almost free from reading errors caused by unevenness of the substrate and films of high transparency.

The pellets of the invention can be prepared by using a cycloolefin ring-opening polymer or copolymer obtained by ring opening cycloolefin monomers of the same or different kinds or a hydrogenation product of the polymer or the copolymer, other than the above-mentioned cycloolefin random copolymer. The cycloolefin ring-opening polymer, the cycloolefin ring-opening copolymer and the hydrogenation products thereof are described below with reference to a case of the cycloolefin represented by the formula [I]. The ring-opening (co)polymer can be obtained by ring-opening (co)polymerizing the cycloolefin represented by the formula [I] in the presence of a ring-opening polymerization catalyst.

In the ring-opening (co)polymer, the cycloolefin represented by the formula [I] is presumed to have a structure represented by the following formula [V]:

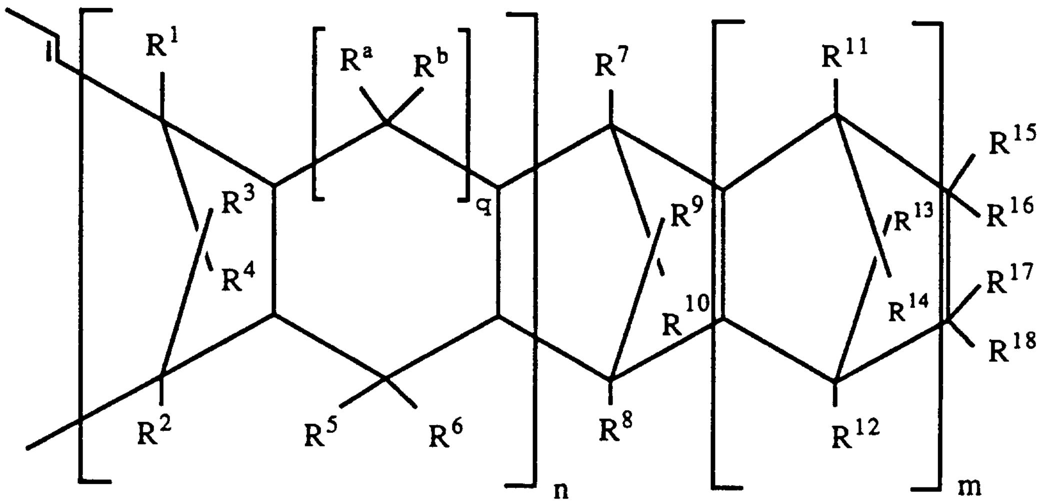

... [V]

wherein m, n, q, $R^1$ to $R^{18}$, $R^a$ and $R^b$ have the same meanings as defined in the formula [I].

The hydrogenation product can be obtained by reducing the above ring-opening (co)polymer in the presence of a reduction catalyst.

In the hydrogenation product, the cycloolefin represented by the formula [I] is presumed to have a structure represented by the following formula [VI]:

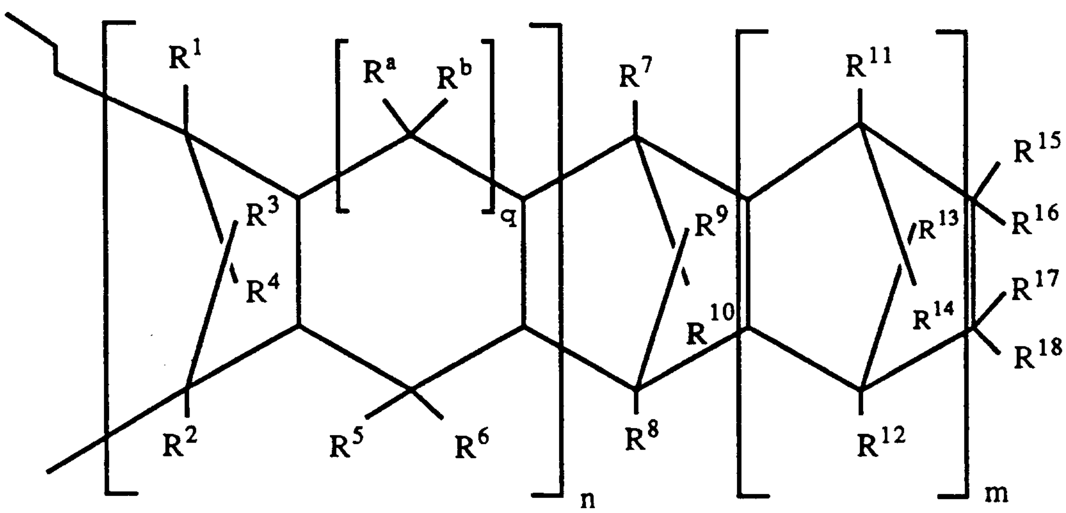

... [VI]

wherein m, n, q, $R^1$ to $R^{18}$, $R^a$ and $R^b$ have the same meanings as defined in the formula [I].

Examples of such polymer include ring-opening copolymers of tetracyclododecene and norbornene, ring-opening copolymers of tetracyclododecene and derivatives of norbornene, and hydrogenation products of these copolymers.

The above-mentioned ring-opening polymer, ring-opening copolymer, hydrogenation product thereof and the cycloolefin random copolymer (hereinafter sometimes named generically "cycloolefin resin") may be partially modified with an unsaturated carboxylic acid such as maleic anhydride. Such modified products can be prepared by reacting the cycloolefin resin with an unsaturated carboxylic acid, anhydride thereof, or derivative thereof such as alkyl ester of unsaturated carboxylic acid. In this case, the content of recurring units derived from the modifier in the modified product of the cycloolefin resin is usually not more than 50 % by mol, preferably not more than 10 % by mol. Such cycloolefin resin modified product can be prepared by adding a modifier to the cycloolefin resin and graft polymerizing the resin so as to obtain the desired modification ratio, or by initially preparing a modified product of high modification ratio and mixing the modified product with an unmodified cycloolefin resin.

In the present invention, the cycloolefin random copolymer, the ring-opening polymer, the ring-opening copolymer, the hydrogenation products thereof, and the modified products thereof can be used singly or in combination.

Other than the above-mentioned cycloolefin resin, a cycloolefin resin having a softening temperature (TMA) of lower than 70 °C may be used in combination, if desired.

In the preparation of the cycloolefin random copolymer pellets of the invention, various additives such as rubber ingredient to enhance the impact strength, heat stabilizer, weathering stabilizer, antistatic agent, slip agent, anti-blocking agent, anti-fogging agent, lubricant, dye, pigment, natural oil, synthetic oil and wax may be added. These additives are used in appropriate amounts.

Examples of the stabilizer used as an optional ingredient include phenol type antioxidants such as tetrakis[methylene-3(3,5-di-t-butyl-4-hydroxyphenyl)propionate]methane, β-(3,5-di-t-butyl-4-hydroxyphenyl)-propionic acid alkyl ester and 2,2'-oxamidobis[ethyl-3(3,5-di-t-butyl-4-hydroxyphenyl)]propionate; metallic salts of fatty acids such as zinc stearate, calcium stearate and calcium 12-hydroxystearate; fatty acid esters of polyhydric alcohol such as glycerol monostearate, glycerol monolaurate, glycerol distearate, pentaerythritol monostearate, pentaerythritol distearate and pentaerythritol tristearate; and phosphorus type stabilizers such as tris(2,4-di-t-butylphenyl)phosphite. These stabilizers may be used singly, or may be used in combination. For example, there can be used a combination of tetrakis[methylene-3(3,5-di-t-butyl-4-hydroxyphenyl)propionate]methane, tris(2,4-di-t-butylphenyl)phosphite, zinc stearate and glycerol monostearate.

In the present invention, a combination of the phenol type antioxidant and the fatty acid ester of polyhydric alcohol is preferably used. The fatty acid ester of polyhydric alcohol is preferably one obtained by esterifying a part of alcoholic hydroxyl groups of the polyhydric alcohol having 3 or more valences. Particular examples of such fatty acid ester of polyhydric alcohol include fatty acid esters of glycerol such as glycerol monostearate, glycerol monolaurate, glycerol monomyristate, glycerol monopalmitate, glycerol distearate and glycerol dilaurate; and fatty acid esters of pentaerythritol such as pentaerythritol monostearate, pentaerythritol monolaurate, pentaerythritol dilaurate, pentaerythritol distearate and pentaerythritol tristearate. The phenol type antioxidant is used in an amount of usually 0 to 10 parts by weight, preferably 0 to 5 parts by weight, more preferably 0 to 2 parts by weight, based on 100 parts by weight of the cycloolefin resin, and the fatty acid ester of polyhydric alcohol is used in an amount of usually 0 to 10 parts by weight, preferably 0 to 5 parts by weight, based on 100 parts by weight of the cycloolefin resin.

Further, the cycloolefin random copolymer pellets may contain fillers such as silica, diatomaceous earth, alumina, titanium oxide, magnesium oxide, pumice powder, pumice balloon, aluminum hydroxide, magnesium hydroxide, basic magnesium carbonate, dolomite, calcium sulfate, potassium titanate, barium sulfate, calcium sulfite, talc, clay, mica, asbestos, glass fiber, glass flake, glass bead, calcium silicate, montmorillonite, bentonite, graphite, aluminum powder, molybdenum sulfide, boron fiber, silicon carbide fiber, polyethylene fiber, polypropylene fiber, polyester fiber and polyamide fiber, with the proviso that the characteristics of the pellets are not marred.

## INDUSTRIAL APPLICATBILITY

The cycloolefin random copolymer pellets of the invention hardly contain the cyclohexane-insoluble cycloolefin random copolymer fine particles having a particle diameter of not more than 1 μm, as described above. Accordingly, reading errors hardly occur when the optical discs formed from the pellets are used, and the films formed from the pellets are excellent in transparency. Further, these discs and films are

excellent not only in the above-mentioned optical characteristics but also in other properties such as heat resistance, aging resistance, chemical resistance, solvent resistance, dielectric properties and mechanical properties.

The cycloolefin random copolymer pellets of the invention having such properties as described above can be easily prepared by using, singly or in combination, a process wherein a copolymer powder is preheated to a temperature of not lower than 50 °C and fed to an extruder, a process wherein the cylinder temperature at the starting position of the melt zone in the extruder is set to a specific temperature, a process wherein the copolymer is melt extruded by a twin-screw extruder whose screws rotates in the same direction, a process wherein the copolymer in the molten state is filtered setting a difference in the pressure between before and behind the polymer filter to not more than a given value, and a process wherein the cycloolefin random copolymer pellets are dryed or mixed under such conditions that the amount of a fine powder such as a powder of pellet fragments is restrained to not more than 100 ppm.

## EXAMPLE

The present invention will be further described with reference to examples, but it should be construed that the invention is in no way limited to those examples.

In the invention, measurement of various properties and evaluation are carried out according to the following methods.

(1) Measurement of the number of the cyclohexane-insoluble cycloolefin random copolymer fine particles having a particle diameter of not less than 1 µm

The cycloolefin random copolymer pellets were dissolved in cyclohexane in an amount of 3 g/liter, in said cyclohexane not more than 200 fine particles having a particle diameter of not less than 1 µm, as measured by a fine particle counter (KL-01 type, produced by Lyon Co.) using a KS-60 type sensor, being contained per 10 ml of cyclohexane. Then, the number of fine particles having a particle diameter of not less than 1 µm contained in 10 ml of the resulting polymer solution was counted by the same fine particle counter.

(2) Evaluation on reading errors in an optical disc substrate

The cycloolefin random copolymer pellets obtained in examples and comparative examples were molded into disc substrates each provided with a spiral groove and having a diameter of 130 mm. On the substrate was formed a laminate film of $SiN_x$/TbFeCo/$SiN_x$/Al (thickness of each layer (angstrom): 1,100/250/300/400, proportion of Tb/Fe/Co (atm.%): 71/23/6) by the use of a sputtering device, and the resulting disc was measured on the bit error rate (BER) under the following conditions.

### Evaluation conditions

Writing frequency: 1 MHz
Writing pulse width: 500 ns
Erasing power: 10 mW
Writing power: 8 mW
Reproduction power: 1.5 mW
Bias magnetic field: 300 Oe
BER measuring area: 40 - 45 mm in radius

### Example 1

### Preparation of a cycloolefin random copolymer

[Preparation of catalysts]

$VO(OC_2H_5)Cl_2$ was diluted with cyclohexane to prepare a vanadium catalyst having a vanadium concentration of 18.6 mmol/liter-cyclohexane. Separately, ethylaluminum sesquichloride ($Al(C_2H_5)_{1.5}Cl_{1.5}$) was diluted with cyclohexane to prepare an organoaluminum catalyst having an aluminum concentration of 164 mmol/liter-cyclohexane.

[Polymerization]

Copolymerization of ethylene, tetracyclo[4,4,0,$1^{2,5}$,$1^{7,10}$]-3-dodecene (cycloolefin, hereinafter sometimes referred to simply as "tetracyclododecene") represented by the following formula and 1-butene (approx. 1.2 % by mol) was continuously carried out by the use of a polymerization reaction system including a polymerizer (inner diameter: 700 mm, overflow capacity: 570 liters, reaction capacity: 300 liters) equipped with a baffle and a stirrer, a vertical-type multi-tube cooling device having a heat transfer area of 19.4 $m^2$, a circulation line for drawing out the polymer solution from the bottom of the polymerizer and circulating the solution through the multi-tube cooling device to give it back to the polymerizer, and a circulating pump arranged in the circulation line.

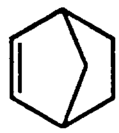

In this reaction, the vanadium catalyst (V catalyst) prepared in the above was fed to the polymerizer in such an amount that the V catalyst concentration in the polymerizer was 0.35 mmol/liter. Further, the V catalyst was beforehand diluted with cyclohexane (i.e., a polymerization solvent) so that the V catalyst concentration in the resulting dilute solution (before feeding to the polymerizer) was 1.8 times as much as the catalyst concentration in the polymerizer, in terms of dilution ratio, thereafter was fed to the polymerizer.

Separately, ethylaluminum sesquichloride, which was an organoaluminum compound, was fed to the polymerizer in such an amount that a ratio (Al/V) of aluminum (Al) to vanadium (V) was 8.0. Moreover, ethylaluminum sesquichloride was beforehand diluted with cyclohexane (i.e., a polymerization solvent) so that the organoaluminum catalyst concentration in the resulting dilute solution (before feeding to the polymerizer) was 11 times as much as the organoaluminum catalyst concentration in the polymerizer, in terms of dilution ratio, thereafter was fed to the polymerizer.

Feeding of these V catalyst and organoaluminum catalyst was conducted in the vicinity of the tips of upper turbine blades of the stirrer which was provided with vertical disc type six turbine blades each having a diameter of 0.25 m at the two (upper and lower) levels, respectively, where the most intensive stirring was performed so that each components were smoothly dispersed and mixed.

Then, cyclohexane, which was a polymerization solvent, was fed to the polymerizer at a feed rate of 233 kg/hr. Further, ethylene and a hydrogen gas (as a molecular weight modifier) were fed to the gas phase area of the polymerizer at feed rates of 2.69 kg/hr and 2.2 N liter/hr, respectively. The polymer solution was vigorously stirred at a power of 4.3 kw/kL by means of the stirrer.

The polymerization temperature was controlled to be 10 °C by circulating a cooling medium of 25 wt.% methanol water within a jacket fitted outside of the polymerizer and on the side of the multi-tube cooling device shell. The polymerization pressure was controlled to be 1.0 $kg/cm^2$-G by introducing a nitrogen gas into the polymerizer.

The inner wall of the polymerizer was cleaned in the following manner. A receiving tray with holes (spray disc) was fitted to the gas phase area of the shaft for connecting the stirrer with the starring blades. Into this spray disc were introduced a cyclohexane solvent, tetracyclododecene and 1-butene at feed rates of 30 kg/hr, 14.2 kg/hr and 0.41 kg/hr, respectively, and simultaneously the shaft was rotated so that the cyclohexane, tetracyclododecene and 1-butene were sprinkled and sprayed onto the inner wall of the polymerizer through the holes of the spray disc owing to the centrifugal force caused by the rotation of the shaft. The tetracyclododecene, the cyclohexane and the 1-butene thus sprayed went down on the inner wall and were included in the liquid phase area.

Under the above-mentioned conditions, copolymerization reaction of ethylene, tetracyclododecene and 1-butene was carried out to obtain a cyclohexane solution of ethylene/tetracyclododecene/1-butene copolymer having a concentration of 34 g/liter.

[Deashing]

To the ethylene/tetracyclododecene copolymer solution having been drawn out from the polymerizer were added hot water of 80 °C and a NaOH solution (as a pH adjustor) having a concentration of 4 % by weight to terminate the copolymerization reaction and to remove the catalyst residue contained in the copolymer solution (deashing procedure).

After the deashing, the copolymer solution was temporarily stored in a container (inner diameter: 900 mm, effective volume: 1.0 $m^3$) equipped with a stirrer, and then cooled to approx. 30 to 40 °C by allowing water of ordinary temperature to flow in the jacket fitted outside of the container.

[Filtration]

The copolymer solution thus obtained was fed to a filtering device including 34 cotton winding filters (vertical-type winding filters available from Nippon Roki Co.) each having a nominal diameter of 1 µm (outer diameter: 63.5 mm, inner diameter: 28 mm, length: 1 m) at a feed rate of 261 kg/hr, and continuously filtered.

Then, the copolymer solution was fed to a filtering device including 3 depth-type filters of borosilicate glass microfiber nonwoven fabric (BX filter available from Bolston Co), each having a nominal diameter of 2 µm (outer diameter: 64 mm, inner diameter: 51 mm, length: 476 mm) at a feed rate of 261 kg/hr, and continuously filtered. At this time, the difference in the pressure (differential pressure) between before and behind the filter was not more than 1.5 kg/$cm^2$.

Thereafter, the copolymer solution was fed to a filtering device including 3 depth-type filters of borosilicate glass microfiber nonwoven fabric (AQ filter available from Bolston Co.), each having a nominal diameter of 0.9 µm (outer diameter: 59 mm, inner diameter: 51 mm, length: 476 mm) at a feed rate of 261 kg/hr, and continuously filtered. At this time, the difference in the pressure (differential pressure) between before and behind the filter was not mroe than 1.5 kg/$cm^2$.

Moreover, the copolymer solution was fed to a filtering device including 3 depth-type filters of borosilicate glass microfiber nonwoven fabric, (AAQ filter available from Bolston Co.), each having a nominal diameter of 0.3 µm (outer diameter: 59 mm, inner diameter: 51 mm, length: 476 mm) at a feed rate of 261 kg/hr, and continuously filtered. At this time, the difference in the pressure (differential pressure) between before and behind the filter was set to be not more than 1.5 kg/$cm^2$.

Finally, the copolymer solution was fed to a filtering device including one pleat-type filter of SUS 304 metal nonwoven fabric (PSP03 filter available from Brandzwick Co.) having a nominal diameter of 0.3 µm (outer diameter: 61 mm, length: 510 mm) at a feed rate of 261 kg/hr, and continuously filtered.

[Precipitation]

The copolymer solution having passed through the deashing and filtering procedures and acetone were fed at feed rates of 261 kg/hr and 1,200 kg/hr, respectively, to a precipitation drum equipped with a stirrer (i.e., first precipitation drum), and they were mixed and stirred while the temperature of the mixture was adjusted to 30 °C so as to precipitate a copolymer in the first precipitation drum.

Then, the acetone dispersion of the copolymer precipitated in the first precipitation drum was fed to a precipitation drum equipped with a baffle and a stirrer (i.e., second precipitation drum) to again precipitate a copolymer.

[Filtration/separation]

The dispersion obtained in the second precipitation drum was filtered and separated into a filtrate and a copolymer which was produced by the polymerization reaction as a wet cake. In the filtrate, unreacted monomers, cyclohexane (i.e., a polymerization solvent) and acetone used in the above precipitation were contained.

The filtrate thus separated was further separated into each components, and they were again used.

[Extraction]

Subsequently, the copolymer wet cake was dispersed in acetone to give a dispersion having a concentration of approx. 20 g/liter. The dispersion was heated to 80 °C under a pressure in an extraction vessel. The dispersion of the copolymer wet cake was heated in this manner to elute the unreacted monomers remaining in the wet cake into acetone.

[Centrifugal separation]

The copolymer dispersion having passed through the extraction procedure was subjected to solid-liquid separation by the use of a centrifugal separator so as to obtain a copolymer wet cake.

[Drying]

The copolymer wet cake obtained through the centrifugal separation was subjected to ordinary pressure drying at 90 °C for 20 minutes by the use of an ordinary pressure dryer.

That is, the copolymer wet cake was heated to dryness by allowing it to pass through the ordinary pressure dryer which was heated with steam having a pressure of 1 $kg/cm^2$-G.

The copolymer wet cake having been subjected to the ordinary pressure drying was then subjected to vacuum drying by the use of a vacuum dryer. The vacuum dryer was heated with steam having a pressure of 2 $kg/cm^2$-G so that the final pressure in the vacuum drying was adjusted to 10 Torr.

The copolymer wet cake having passed through the ordinary pressure drying was introduced into the vacuum dryer and dried for 3 hours to obtain a copolymer powder.

To 100 parts by weight of the copolymer powder thus obtained were added, as stabilizers, 0.6 part by weight of tetrakis[methylene-3-(3,5-di-t-butyl-4-hydroxyphenyl)propionate]methane (Irganox 1010, available from Nippon Ciba-Geigy K.K.), 0.25 parts by weight of tris(2,4-di-t-butylphenyl)phosphite (Phosphite 168, available from Nippon Ciba-Geigy K.K.), 0.6 part by weight of stearic acid monoglyceride and 0.02 part by weight of zinc stearate.

Preparation of copolymer pellets

[Pelletization]

The copolymer powder was fed to a twin-screw two-way extruder (TXE-44SS available from Nippon Seikosho K.K., screw diameter: 44 mm, L/D: 30) at room temperature and melt-extruded to prepare pellets having a diameter of approx. 3 mm.

This extruder is formed from a nitrided iron type special steel. In the extruder, the barrel temperature of the melt zone was set to be 260 °C, and the temperatures of the vent zone, the compression zone and the metering zone were each set to be 250 °C. The screws of the extruder were set to be rotated at a specific energy of 0.15 kwh/kg.

The copolymer was melt-extruded as above, and then filtered through a leaf-type polymer filter made of SUS metal nonwoven fabric (nominal diameter: 5 µm, produced by Nippon Seisen K.K.), which was provided at the tip of the extruder. The difference in the pressure (differential pressure) between before and behind the filter at this time was set to be 40 $kg/cm^2$.

[Drying and classification of pellets]

The obtained copolymer pellets were dried to remove moisture attached to the pellets. Further, prior to packing the pellets in a product container, fine substances having a weight of not more than 1/10 as much as the weight of the pellet, specifically, a pellet-worn powder, pellets having small diameters, fragments of broken pellets, fine foreign substances attached to the pellets produced in the drying of the pellets, were also removed from the pellets by means of air drying.

When the number of the cyclohexane-insoluble fine particles contained in the cycloolefin random copolymer pellets thus obtained was measured in the aforementioned manner, it was 27,000 particles/30 mg. Using the pellets, a substrate was formed, and an optical disc was then produced. When the bit error rate (BER) of the optical disc was measured in the aforementioned manner, it was $3.5 \times 10^{-6}$.

Comparative Example 1

The procedures of Example 1 were repeated except that the filtration by the SUS metal nonwoven fabric was not carried out in the pelletization procedure, to prepare pellets.

When the number of the cyclohexane-insoluble fine particles contained in the cycloolefin random copolymer pellets thus obtained was measured in the aforementioned manner, it was 62,000 particles/30 mg. Using the pellets, a substrate was formed, and an optical disc was then produced. When the bit error rate (BER) of the optical disc was measured in the aforementioned manner, it was $10.7 \times 10^{-6}$.

Example 2

The cycloolefin random copolymer powder obtained in the drying procedure of Example 1 was preheated in the following manner.

[Preheating]

The copolymer powder obtained in the drying procedure was introduced into a horizontal-type cylindrical container having a volume of 2 $m^3$ and equipped with a paddle stirrer and a jacket. Steam was allowed to pass through the jacket to heat the cycloolefin random copolymer powder to approx. 90 to 100 °C while stirring by the paddle stirrer.

[Pelletization]

10 kg of the copolymer powder thus preheated was immediately fed to a twin-screw two-way extruder having one atmosphere vent (TEX-44SS, available from Nippon Seikosho K.K., screw diameter: 44 mm, L/D: 30), and melt-extruded. This extruder is formed from an iron type special steel, whose surface is subjected to nitriding teatment which is contacted with the molten resin.

In the extruder, the cylinder temperature of the melt zone was set to be 210 °C, while the cylinder temperatures of the vent zone, the compression zone and the metering zone were 250 °C, 250 °C and 250 °C, respectively.

The number of screw rotations of the extruder was set to be 125 rpm, and the copolymer was melt-extruded in the cylinder having the above-mentioned cylinder temperatures.

The copolymer was melt-extruded as above, and then filtered through a leaf-type polymer filter made of SUS metal nonwoven fabric (nominal diameter: 5 µm, available from Nippon Seisen K.K.), which was provided at the tip of the extruder, to prepare pellets having a diameter of approx. 3 mm.

The difference in the pressure (differential pressure) between before and behind the filter at this time was set to be approx. 40 kg/$cm^2$.

[Drying and classification of pellets]

The obtained copolymer pellets were dried to remove moisture attached to the pellets. Further, prior to packing the pellets in a product container, a pellet-worn powder, pellets having small diameters, fragments of broken pellets, fine foreign substances attached to the pellets, etc. having a particle weight of not more than 1/10 as much as the weight of the pellet were also removed from the pellets by means of an air classification device.

When the number of the cyclohexane-insoluble fine particles contained in the cycloolefin random copolymer pellets thus obtained was measured in the aforementioned manner, it was 29,000 particles/30 mg.

Example 3

The procedures of Example 2 were repeated except that the operation in the preheating procedure was carried out as follows to make the cycloolefin random copolymer molten and that the molten copolymer was immediately feed to the extruder, to prepare cycloolefin random copolymer pellets.

[Preheating]

The cycloolefin random copolymer powder blended with the stabilizers was fed to a hopper having an internal volume of 1 $m^3$ and provided with a jacket. Steam of 20 kg/$cm^2$-G was introduced into the jacket to heat the copolymer powder to 200 °C so as to melt it.

When the number of the cyclohexane-insoluble fine particles contained in the cycloolefin random copolymer pellets thus obtained was measured in the aforementioned manner, it was 21,000 particles/30 mg. Using the pellets, a substrate was formed, and an optical disc was then produced. When the bit error rate (BER) of the optical disc was measured in the aforementioned manner, it was $2.7 \times 10^{-6}$.

Comparative Example 2

The procedures of Example 2 were repeated except that the copolymer powder was fed to the extruder at 30 °C without preheating the copolymer powder, to prepare pellets.

When the number of the cyclohexane-insoluble fine particles contained in the cycloolefin random copolymer pellets thus obtained was measured in the aforementioned manner, it was 65,000 particles/30 mg. Using the pellets, a substrate was formed, and an optical disc was then produced. When the bit error

rate (BER) of the optical disc was measured in the aforementioned manner, it was $15.0 \times 10^{-6}$.

Further, the pellets were charged in a drying container for use in Example 7 (described later) without classifying the pellets, and dried in the stirring device having a ribbon type stirrer by intermittently rotating the stirrer at a rate of 17 rpm over 24 hours. The total time for the stirring was 180 minutes.

When the number of the cyclohexane-insoluble fine particles contained in the copolymer pellets thus dried was measured in the aforementioned manner, it was 66,000 particles/30 mg. Using the pellets, a substrate was formed, and an optical disc was then produced. When the bit error rate (BER) of the optical disc was measured in the aforementioned manner, it was $15.5 \times 10^{-6}$.

Example 4

When the glass transition temperature (Tg) of the copolymer powder obtained in the procedure of "preparation of a cycloolefin random copolymer" in Example 1, it was 129 °C.

[Pelletization]

The copolymer powder obtained in the procedure of "preparation of a cycloolefin random copolymer" in Example 1 and having a glass transition temperature of 129 °C was fed to a twin-screw two-way extruder (TEX-44SS, available from Nippon Seikosho K.K., screw diameter: 44 mm, L/D: 30) at a feed rate of 10 kg/hr at room temperature, and melt-extruded. This extruder has one atmosphere vent.

In the extruder, the cylinder temperature of the melt zone at the nearest place to the hopper was set to be 260 °C, and this temperature was higher than the glass transition temperature of the copolymer powder by 131 °C. The cylinder temperature of this position was the highest in the melt zone. The cylinder temperatures of the vent zone, the compression zone and the metering zone were 250 °C, 250 °C and 250 °C, respectively.

In the cylinder having the above-mentioned cylinder temperatures, the screws of the extruder were set to be rotated at a specific energy of 0.15 kwh/kg, and the copolymer was melt-extruded.

The copolymer was melt-extruded as above, and then filtered through a leaf-type polymer filter made of SUS metal nonwoven fabric (nominal diameter: 5 μm, available from Nippon Seisen K.K.), which was provided at the tip of the extruder, to prepare pellets having a diameter of approx. 3 mm.

The differential pressure of the polymer filter at this time was set to be approx. 40 $kg/cm^2$.

[Drying and classification of pellets]

The obtained copolymer pellets were dried to remove moisture attached to the pellets. Further, prior to packing the pellets in a product container, a pellet-worn powder, pellets having small diameters, fragments of broken pellets, fine foreign substances attached to the pellets, etc. having a particle weight of not more than 1/10 as much as the weight of the pellet were also removed from the pellets by means of an air classification device.

When the number of the cyclohexane-insoluble fine particles contained in the cycloolefin random copolymer pellets thus obtained was measured in the aforementioned manner, it was 27,000 particles/30 mg.

Comparative Example 3

The procedures of Example 4 were repeated except that the cylinder temperature at the starting position of the melt zone in the extruder was set to be 210 °C, which was higher by 81 °C than the glass transition temperature (Tg) of the copolymer used, to prepare pellets.

When the number of the cyclohexane-insoluble fine particles contained in the cycloolefin random copolymer pellets thus obtained was measured in the aforementioned manner, it was 65,000 particles/30 mg.

Example 5

[Pelletization]

The copolymer powder obtained in the procedure of "preparation of a cycloolefin random copolymer" in Example 1 and having a glass transition temperature of 129 °C was fed to a twin-screw extruder (TEX-44SS, available from Nippon Seikosho K.K., screw diameter: 44 mm, L/D: 30) having two screws rotating to the same direction at a feed rate of 10 kg/hr at room temperature, and melt-extruded. The two screws of this extruder are connected with a motor in such a manner that the rotation directions of the screws are the same as each other. The depth (h) of each screw channel of this twin-screw extruder is 4 mm, and the number of threads is 2. This extruder has no mixing element, but has one atmosphere vent.

The cylinder temperature of the melt zone in the twin-screw extruder was set to be 210 °C, while the cylinder temperatures of other zones (vent zone, compression zone and metering zone) were each set to be 250 °C.

In the cylinder having the above-mentioned cylinder temperatures, the screws of the extruder were set to be rotated at a specific energy of 0.15 kwh/kg and a rate of 125 rpm in the same direction, and the copolymer was melt-extruded.

The copolymer was melt-extruded as above, and then filtered through a leaf-type polymer filter made of SUS metal nonwoven fabric (nominal diameter: 5 μm, available from Nippon Seisen K.K.), which was provided at the tip of the extruder, to prepare pellets having a diameter of approx. 3 mm.

The differential pressure of the polymer filter at this time was set to be approx. 40 kg/cm$^2$.

[Drying and classification of pellets]

The obtained copolymer pellets were dried to remove moisture attached to the pellets. Further, prior to packing the pellets in a product container, a pellet-worn powder, pellets having small diameters, fragments of broken pellets, fine foreign substances attached to the pellets, etc. having a particle weight of not more than 1/10 as much as the weight of the pellet were also removed from the pellets by means of an air classification device.

When the number of the cyclohexane-insoluble fine particles contained in the cycloolefin random copolymer pellets thus obtained was measured in the aforementioned manner, it was 28,000 particles/30 mg. Using the pellets, a substrate was formed, and an optical disc was then produced. When the bit error rate (BER) of the optical disc was measured in the aforementioned manner, it was $4.8 \times 10^{-6}$.

Comparative Example 4

The procedures of Example 5 were repeated except that a twin-screw two-way extruder in which the rotation directions of the two screws were different from each other was used, to prepare cycloolefin random copolymer pellets.

When the number of the cyclohexane-insoluble fine particles having a diameter of not less than 1 μm contained in the cycloolefin random copolymer pellets thus obtained was measured in the aforementioned manner, it was 65,000 particles/30 mg.

Example 6

[Pelletization]

The copolymer powder obtained in the procedure of "preparation of a cycloolefin random copolymer" in Example 1 and having a glass transition temperature of 129 °C was fed to a twin-screw two-way extruder (TEX-44SS, available from Nippon Seikosho K.K., screw diameter: 44 mm, L/D: 30) at a feed rate of 10 kg/hr at room temperature, and melt-extruded. This extruder has one atmosphere vent.

The copolymer was melt-extruded as above, and then filtered through a leaf-type polymer filter made of SUS metal nonwoven fabric (nominal diameter: 5 μm, available from Nippon Seisen K.K.), which was provided at the tip of the extruder, to prepare pellets having a diameter of approx. 3 mm. The temperature of the polymer filter was set to be 280 °C, which was higher by 151 °C than the glass transition temperature (Tg) of the cycloolefin random copolymer used.

The differential pressureof the polymer filter at this time was set to be approx. 40 kg/cm$^2$.

The cylinder temperature of the melt zone in the extruder was set to be 260 °C, while the cylinder temperatures of other zones (vent zone, compression zone and metering zone) were each set to be 250 °C.

[Drying and classification of pellets]

From the cycloolefin random copolymer pellets obtained in the above, fine substances each having a weight of not more than 1/10 as much as the weight of the pellet were removed by means of an air classification device. Specifically, a pellet-worn powder, pellets having small diameters, fragments of broken pellets, fine foreign substances attached to the pellets, etc. produced in drying of the pellets were removed.

Then, the cycloolefin random copolymer pellets were dried to remove moisture attached to the pellets, and packed in a product container.

When the number of the cyclohexane-insoluble fine particles contained in the cycloolefin random copolymer pellets thus obtained was measured in the aforementioned manner, it was 27,000 particles/30 mg.

Comparative Example 5

The procedures of Example 6 were repeated except that the difference in the pressure (differential pressure) between before and behind the polymer filter at the time when the cycloolefin random copolymer passed through the filter was set to approx. 100 kg/cm$^2$, to prepare cycloolefin random copolymer pellets.

When the number of the cyclohexane-insoluble fine particles having a diameter of not less than 1 $\mu$m contained in the cycloolefin random copolymer pellets thus obtained was measured in the aforementioned manner, it was 61,000 particles/30 mg. Using the pellets, a substrate was formed, and an optical disc was then produced. When the bit error rate (BER) of the optical disc was measured in the aforementioned manner, it was $10.2 \times 10^{-6}$.

Example 7

[Pelletization]

The copolymer powder obtained in the procedure of "preparation of a cycloolefin random copolymer" in Example 1 and having a glass transition temperature of 129 °C was fed to a twin-screw two-way extruder having one atmosphere vent (TEX-44SS, available from Nippon Seikosho K.K., screw diameter: 44 mm, L/D: 30) at room temperature, and melt-extruded.

The copolymer was melt-extruded as above, and then filtered through a leaf-type polymer filter made of SUS metal nonwoven fabric (nominal diameter: 5 $\mu$m, available from Nippon Seisen K.K.), which was provided at the tip of the extruder, to prepare pellets having a diameter of approx. 3 mm.

[Drying of pellets]

560 kg of the obtained pellets were charged in a container (inner diameter: 1,100 mm, internal volume: 1.75 m$^3$) which was vertically provided with a ribbon type stirrer and equipped with a jacket. The container and the stirrer are formed from SUS 304, and their surfaces have been subjected to mirror finish or electropolishing after buffing with a buff of #250.

In this container, two ribbon blades, one of which has a width of 110 mm and the other of which has a width of 50 mm, are arranged, and the halical angle of each blade is 900 mm in terms of pitch. These two blades are arranged in such a manner that the pellets are pushed up by virtue of the rotation thereof.

The ribbon type stirrer is arranged in such a manner that a gap of 25 to 30 mm is formed between the tip of the ribbon blade and the top of the inner wall of the container and that a gap of 40 to 50 mm is formed between the tip of the ribbon blade and the bottom of the inner wall of the container.

Further, a jacket is provided on the outer periphery of the container. The pellets were dried by adjusting the temperature of the jacket to 60 °C and making the inside of the container vacuum.

The pellets were dried in the stirring device having the above-mentioned ribbon type stirrer by intermittently rotating the stirrer at a rate of 4 rpm over 24 hours. The total time for the stirring was 48 minutes.

Then, the pellets thus dried were packed in a product container without removing a fine powder by means of classification.

When the number of the cyclohexane-insoluble fine particles contained in the copolymer pellets thus dried was measured in the aforementioned manner, it was 27,000 particles/30 mg.

Comparative Example 6

The procedures of Example 7 were repeated except that the gap between the ribbon blade and the bottom of the inner wall of the container was narrowed to 25 to 30 mm, one ribbon blade having a width of 50 mm out of the two ribbon blades was arranged so that the pellets were pushed down to the bottom of the container by virtue of the rotation of the blade, and that the rotation rate of the stirrer was increased to 17 rpm so that the total time for the stirring was 180 minutes. Cycloolefin random copolymer pellets were prepared in accordance with Example 7, excepting the above modifications.

When the number of the cyclohexane-insoluble fine particles having a diameter of not less than 1 $\mu$m contained in the cycloolefin random copolymer pellets thus obtained was measured in the aforementioned manner, it was 65,000 particles/30 mg. Using the pellets, a substrate was formed, and an optical disc was then produced. When the bit error rate (BER) of the optical disc was measured in the aforementioned manner, it was $18.6 \times 10^{-6}$.

Example 8

[Pelletization]

The copolymer powder obtained in the procedure of "preparation of a cycloolefin random copolymer" in Example 1 and having a glass transition temperature of 129 °C was fed to a hopper having an internal volume of 1 $m^3$ and provided with a jacket in the same manner as described in Example 3. Steam of 20 $kg/cm^2$-G was introduced into the jacket to heat the copolymer powder to 200 °C so as to melt it. Then, the molten copolymer was fed to a twin-screw extruder (TEX-44SS, available from Nippon Seikosho K.K., screw diameter: 44 mm, L/D: 30) having two screws rotating to the same direction at a feed rate of 10 kg/hr at room temperature, and melt-extruded. The two screws of this extruder are connected with a motor in such a manner the rotation directions of the screws are the same as each other. This extruder has one atmosphere vent.

The depth (h) of each screw channel of the twin-screw extruder is 4 mm, and the number of threads is 2. This extruder has no mixing element.

The cylinder temperature of the melt zone in the twin-screw extruder was set to be 260 °C, while the cylinder temperatures of other zones (vent zone, compression zone and metering zone) were each set to be 250 °C.

In the cylinder having the above-mentioned cylinder temperatures, the screws of the extruder were set to be rotated at a specific energy of 0.15 kwh/kg and a rate of 125 rpm in the same direction, and the copolymer was melt-extruded.

The copolymer was melt-extruded as above, and then filtered through a leaf-type polymer filter made of SUS metal nonwoven fabric (nominal diameter: 5 $\mu$m, available from Nippon Seisen K.K.), which was provided at the tip of the extruder, to prepare pellets having a diameter of approx. 3 mm. The temperature of the polymer filter was set to be 280 °C, which was higher by 151 °C than the glass transition temperature (Tg) of the cycloolefin random copolymer used.

The differential pressure of the polymer filter at this time was set to be approx. 40 $kg/cm^2$.

[Drying and classification of pellets]

From the cycloolefin random copolymer pellets obtained in the above, fine substances each having a weight of not more than 1/10 as much as the weight of the pellet were removed by means of an air classification device. Specifically, a pellet-worn powder, pellets having small diameters, fragments of broken pellets, fine foreign substances attached to the pellets, etc. produced in drying of the pellets were removed.

Then, the cycloolefin random copolymer pellets were dried to remove moisture attached to the pellets, and packed in a product container.

When the number of the cyclohexane-insoluble fine particles contained in the cycloolefin random copolymer pellets thus obtained was measured in the aforementioned manner, it was 5,000 particles/30 mg, that is, the amount of the cyclohexane-insoluble fine particles contained in the cycloolefin random copolymer pellets was extremely small. Using the pellets, a substrate was formed, and an optical disc was then produced. When the bit error rate (BER) of the optical disc was measured in the aforementioned manner, it was $1.2 \times 10^{-6}$.

Comparative Example 7

[Pelletization]

The procedure of the pelletization in Example 8 was repeated except that the cycloolefin random copolymer powder of 30 °C was fed to a twin-screw extruder in which the rotation directions of the screws were different from each other without preheating the copolymer powder and then melt-extruded and that the molten copolymer was filtered at a filter differential pressure of approx. 100 kg/$cm^2$, to prepare cycloolefin random copolymer pellets.

[Drying of pellets]

The pellets were charged in a drying container used in Example 7 and dried in the stirring device having a ribbon type stirrer by intermittently rotating the stirrer at a rate of 17 rpm over 24 hours. The total time for the stirring was 180 minutes.

The pellets thus dried were packed in a product container without removing a fine powder by means of classification.

When the number of the cyclohexane-insoluble fine particles contained in the cycloolefin random copolymer pellets thus obtained was measured in the aforementioned manner, it was more than 100,000 particles/30 mg, and the accurate number could not be measured.

Using the pellets, a substrate was formed, and an optical disc was then produced. When the bit error rate (BER) of the optical disc was measured in the aforementioned manner, it was $35.2 \times 10^{-6}$.

**Claims**

1. Cycloolefin random copolymer pellets obtained by copolymerizing (a) ethylene and (b) a cycloolefin represented by the following formula [I] or [II] and having a softening temperature (TMA) of not lower than 70 °C, in which not more than 60,000 of cyclohexane-insoluble cycloolefin random copolymer fine particles having a particle diameter of not less than 1 μm are contained per 30 mg of the pellets;

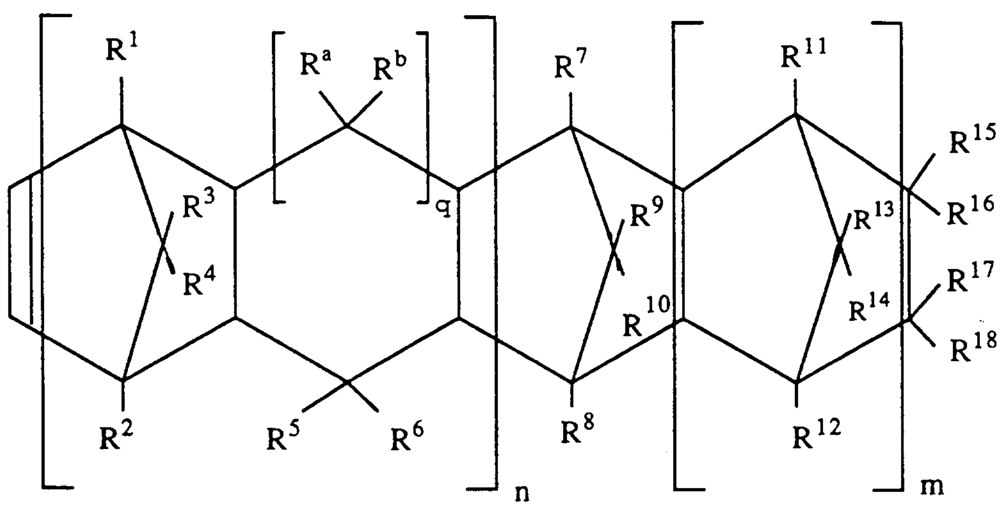

... [I]

wherein n is 0 or 1; m is 0 or a positive integer; q is 0 or 1; $R^1$ to $R^{18}$, and $R^a$ and $R^b$ are each independently an atom or a group selected from the group consisting of a hydrogen atom, a halogen atom and a hydrocarbon group; $R^{15}$ to $R^{18}$ may be bonded to each other to form a monocyclic or polycyclic ring which may have a double bond; and $R^{15}$ and $R^{16}$, or $R^{17}$ and $R^{18}$ may form together an alkylidene group;

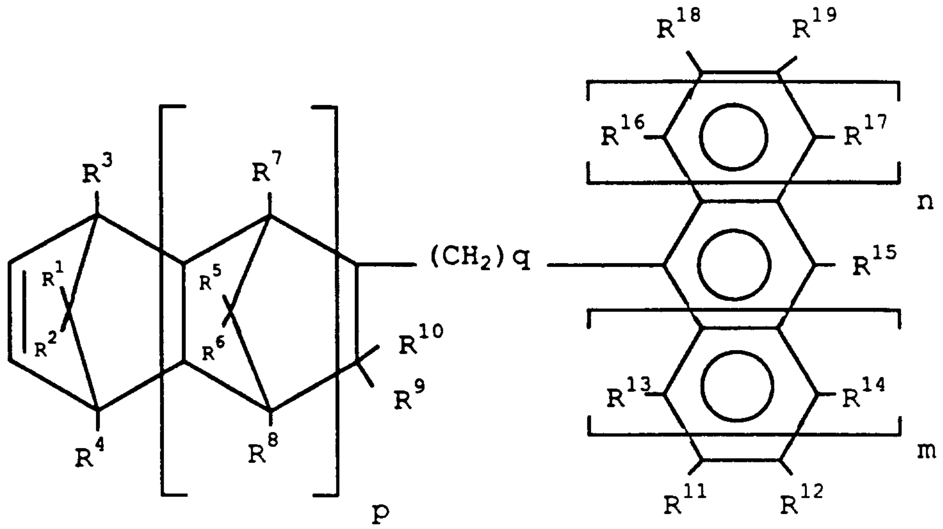

... [II]

wherein each of p and q is 0 or a positive integer; each of m and n is 0, 1 or 2; $R^1$ to $R^{19}$ are each independently a hydrogen atom, a halogen atom, a hydrocarbon group or an alkoxy group; a carbon atom to which $R^9$ or $R^{10}$ is bonded may be linked to either a carbon atom to which $R^{13}$ is bonded or a carbon atom to which $R^{11}$ is bonded directly or by way of an alkylene group of 1 to 3 carbon atoms; and when each of m and n is 0, $R^{15}$ and $R^{12}$, or $R^{15}$ and $R^{19}$ may be bonded to each other to form a monocyclic or polycyclic aromatic ring.

**2.** A process for preparing cycloolefin random copolymer pellets, comprising feeding a cycloolefin random copolymer to an extruder, said copolymer being obtained by copolymerizing (a) ethylene and (b) at least one cycloolefin represented by the following formula [I] or [II] and having a softening temperature (TMA) of not lower than 70 °C, and extruding the cycloolefin random copolymer in the molten state from the extruder, wherein:

the cycloolefin random copolymer is preheated to a temperature of not lower than 50 °C, then fed to the extruder and pelletized;

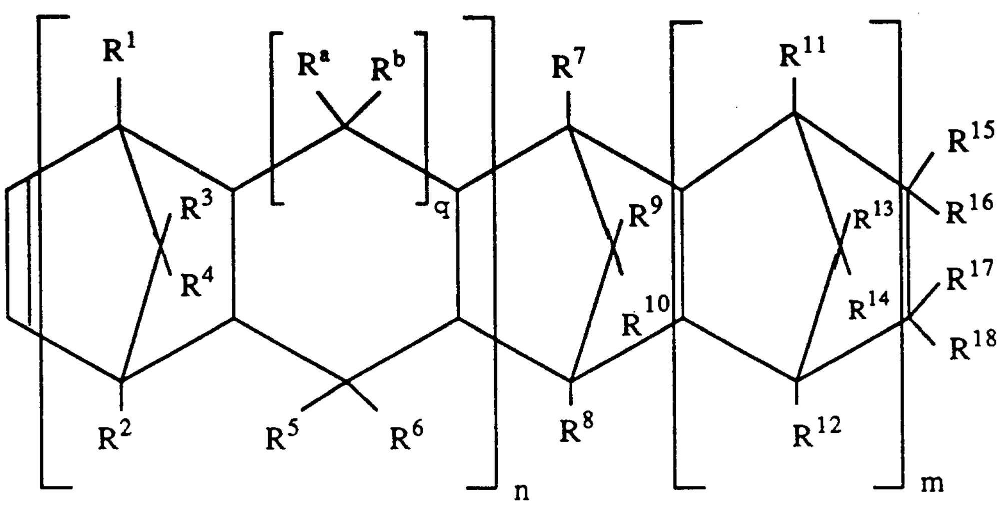

... [I]

wherein n is 0 or 1; m is 0 or a positive integer; q is 0 or 1; $R^1$ to $R^{18}$, and $R^a$ and $R^b$ are each independently an atom or a group selected from the group consisting of a hydrogen atom, a halogen

atom and a hydrocarbon group; $R^{15}$ to $R^{18}$ may be bonded to each other to form a monocyclic or polycyclic ring which may have a double bond; and $R^{15}$ and $R^{16}$, or $R^{17}$ and $R^{18}$ may form together an alkylidene group;

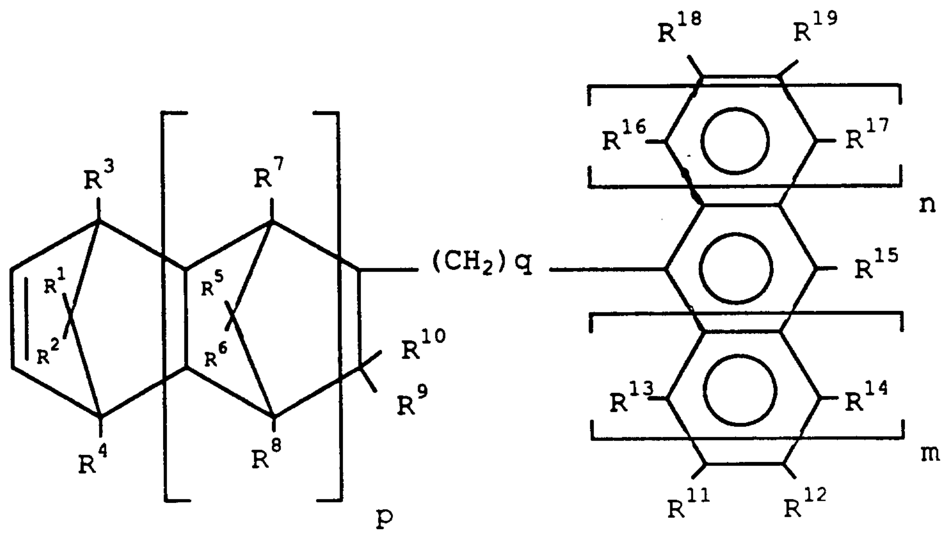

... [II]

wherein each of p and q is 0 or a positive integer; each of m and n is 0, 1 or 2; $R^1$ to $R^{19}$ are each independently a hydrogen atom, a halogen atom, a hydrocarbon group or an alkoxy group; a carbon atom to which $R^9$ or $R^{10}$ is bonded may be linked to either a carbon atom to which $R^{13}$ is bonded or a carbon atom to which $R^{11}$ is bonded directly or by way of an alkylene group of 1 to 3 carbon atoms; and when each of m and n is 0, $R^{15}$ and $R^{12}$, or $R^{15}$ and $R^{19}$ may be bonded to each other to form a monocyclic or polycyclic aromatic ring.

**3.** The process for preparing cycloolefin random copolymer pellets as claimed in claim 2, wherein the cycloolefin random copolymer fed to the extruder is a cycloolefin random copolymer powder substantially not containing a solvent.

**4.** The process for preparing cycloolefin random copolymer pellets as claimed in claim 2, wherein the cycloolefin random copolymer fed to the extruder contains a solvent in an amount of not more than 20 % by weight.

**5.** The process for preparing cycloolefin random copolymer pellets as claimed in any one of claims 2 to 4, wherein the number of cyclohexane-insoluble cycloolefin random copolymer fine particles having a particle diameter of not less than 1 µm contained in 30 mg of the resulting cycloolefin random copolymer pellets is not more than 60,000.

**6.** A process for preparing cycloolefin random copolymer pellets, comprising feeding a cycloolefin random copolymer to an extruder, said copolymer being obtained by copolymerizing (a) ethylene and (b) at least one cycloolefin represented by the following formula [I] or [II] and having a softening temperature (TMA) of not lower than 70 °C, and extruding the cycloolefin random copolymer in the molten state from the extruder, wherein:

the cycloolefin random copolymer is fed to the extruder whose cylinder temperature at the starting position of the melt zone is higher by not lower than 90 °C than the glass transition temperature (Tg) of the copolymer fed to the extruder and higher than other zones of the extruder, and pelletized;

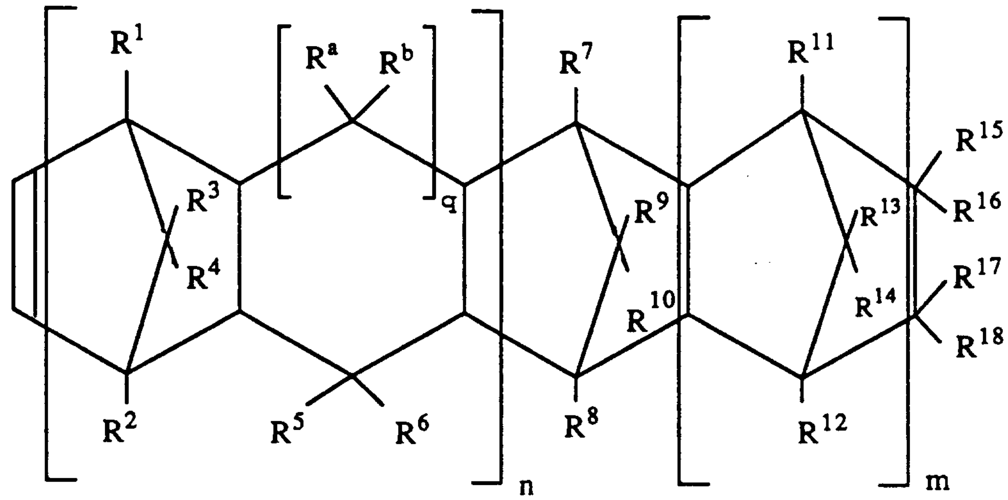

... [I]

wherein n is 0 or 1; m is 0 or a positive integer; q is 0 or 1; $R^1$ to $R^{18}$, and $R^a$ and $R^b$ are each independently an atom or a group selected from the group consisting of a hydrogen atom, a halogen atom and a hydrocarbon group; $R^{15}$ to $R^{18}$ may be bonded to each other to form a monocyclic or polycyclic ring which may have a double bond; and $R^{15}$ and $R^{16}$, or $R^{17}$ and $R^{18}$ may form together an alkylidene group;

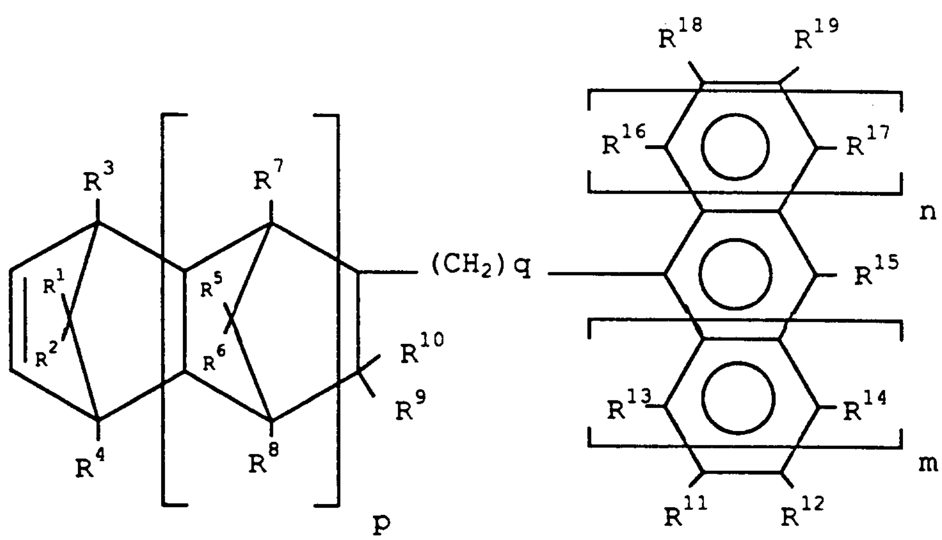

... [II]

wherein each of p and q is 0 or a positive integer; each of m and n is 0, 1 or 2; $R^1$ to $R^{19}$ are each independently a hydrogen atom, a halogen atom, a hydrocarbon group or an alkoxy group; a carbon atom to which $R^9$ or $R^{10}$ is bonded may be linked to either a carbon atom to which $R^{13}$ is bonded or a carbon atom to which $R^{11}$ is bonded directly or by way of an alkylene group of 1 to 3 carbon atoms; and when each of m and n is 0, $R^{15}$ and $R^{12}$, or $R^{15}$ and $R^{19}$ may be bonded to each other to form a monocyclic or polycyclic aromatic ring.

**7.** The process for preparing cycloolefin random copolymer pellets as claimed in claim 6, wherein the number of cyclohexane-insoluble cycloolefin random copolymer fine particles having a particle diameter of not less than 1 $\mu$m contained in 30 mg of the resulting cycloolefin random copolymer pellets is not more than 60,000.

**8.** A process for preparing cycloolefin random copolymer pellets, comprising feeding a cycloolefin random copolymer to a twin-screw extruder, said copolymer being obtained by copolymerizing (a) ethylene and (b) at least one cycloolefin represented by the following formula [I] or [II] and having a softening temperature (TMA) of not lower than 70 °C, and extruding the cycloolefin random copolymer in the molten state from the twin-screw extruder, wherein:

the cycloolefin random copolymer is fed to the twin-screw extruder in which the rotation directions of the screws are the same as each other, and pelletized;

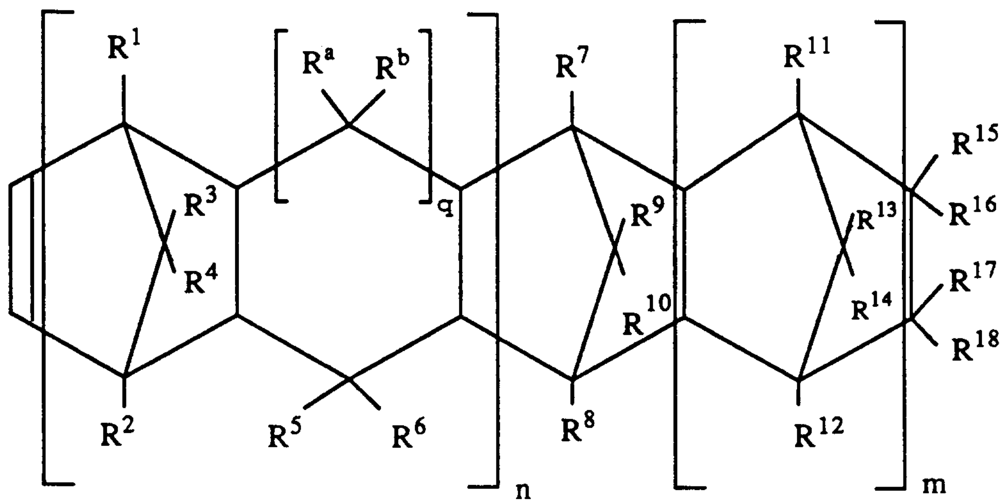

... [I]

wherein n is 0 or 1; m is 0 or a positive integer; q is 0 or 1; $R^1$ to $R^{18}$, and $R^a$ and $R^b$ are each independently an atom or a group selected from the group consisting of a hydrogen atom, a halogen atom and a hydrocarbon group; $R^{15}$ to $R^{18}$ may be bonded to each other to form a monocyclic or polycyclic ring which may have a double bond; and $R^{15}$ and $R^{16}$, or $R^{17}$ and $R^{18}$ may form together an alkylidene group;

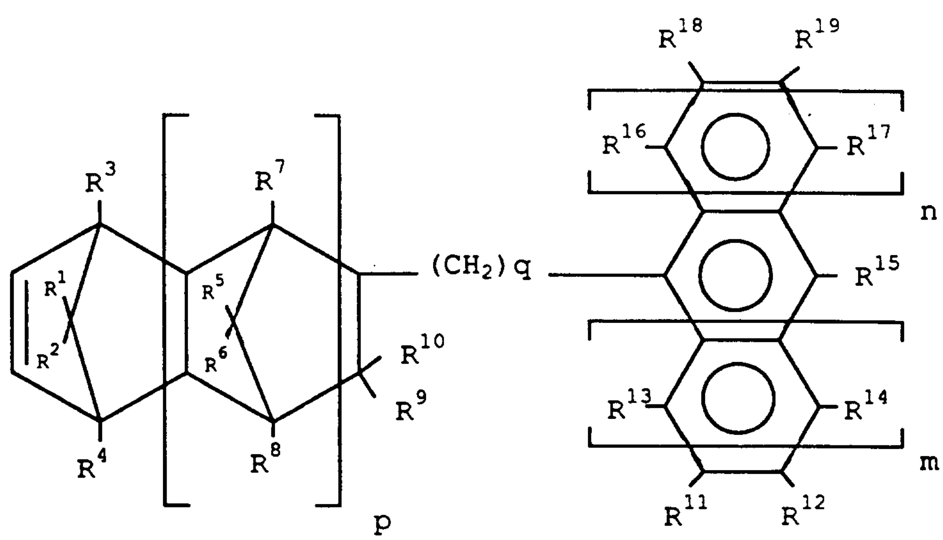

... [II]

wherein each of p and q is 0 or a positive integer; each of m and n is 0, 1 or 2; $R^1$ to $R^{19}$ are each independently a hydrogen atom, a halogen atom, a hydrocarbon group or an alkoxy group; a carbon atom to which $R^9$ or $R^{10}$ is bonded may be linked to either a carbon atom to which $R^{13}$ is bonded or a

carbon atom to which $R^{11}$ is bonded directly or by way of an alkylene group of 1 to 3 carbon atoms; and when each of m and n is 0, $R^{15}$ and $R^{12}$, or $R^{15}$ and $R^{19}$ may be bonded to each other to form a monocyclic or polycyclic aromatic ring.

**9.** The process for preparing cycloolefin random copolymer pellets as claimed in claim 8, wherein the number of threads of the twin-screw extruder is one or two.

**10.** The process for preparing cycloolefin random copolymer pellets as claimed in claim 8, wherein two screws of the twin-screw extruder are interlocked with each other.

**11.** The process for preparing cycloolefin random copolymer pellets as claimed in any one of claims 8 to 10, wherein the number of cyclohexane-insoluble cycloolefin random copolymer fine particles having a particle diameter of not less than 1 $\mu$m contained in 30 mg of the resulting cycloolefin random copolymer pellets is not more than 60,000.

**12.** A process for preparing cycloolefin random copolymer pellets, comprising feeding a cycloolefin random copolymer to an extruder, said copolymer being obtained by copolymerizing (a) ethylene and (b) a cycloolefin represented by the following formula [I] or [II] and having a softening temperature (TMA) of not lower than 70 °C, and extruding the cycloolefin random copolymer in the molten state from the extruder, wherein:

after melt extrusion of the cycloolefin random copolymer from the extruder, the molten copolymer is allowed to pass through a polymer filter while a difference in the pressure between before and behind the polymer filter is adjusted to not more than 90 kg/$cm^2$;

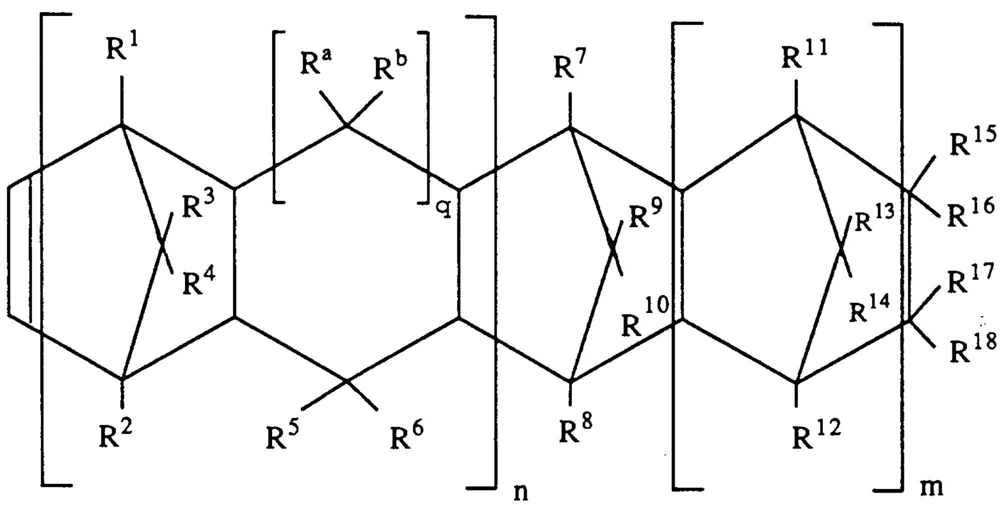

... [I]

wherein n is 0 or 1; m is 0 or a positive integer; q is 0 or 1; $R^1$ to $R^{18}$, and $R^a$ and $R^b$ are each independently an atom or a group selected from the group consisting of a hydrogen atom, a halogen atom and a hydrocarbon group; $R^{15}$ to $R^{18}$ may be bonded to each other to form a monocyclic or polycyclic ring which may have a double bond; and $R^{15}$ and $R^{16}$, or $R^{17}$ and $R^{18}$ may form together an alkylidene group;

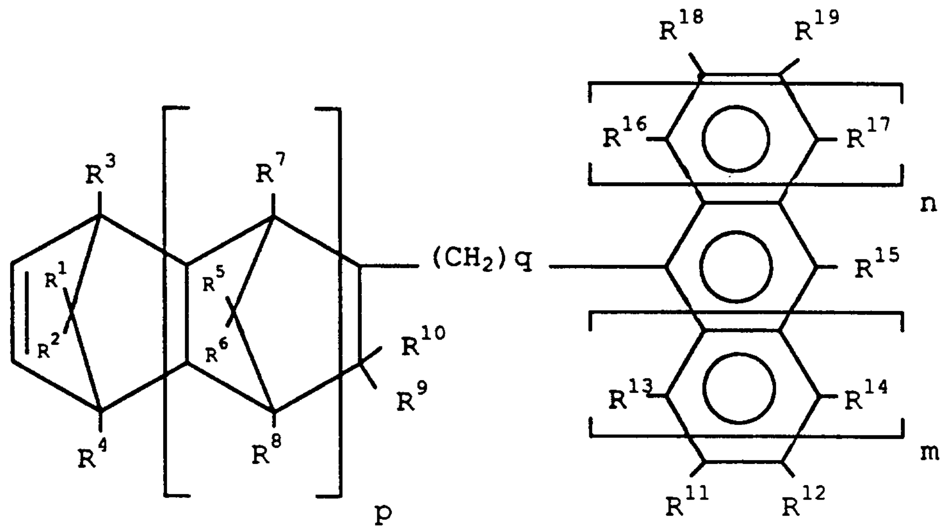

... [II]

wherein each of p and q is 0 or a positive integer; each of m and n is 0, 1 or 2; $R^1$ to $R^{19}$ are each independently a hydrogen atom, a halogen atom, a hydrocarbon group or an alkoxy group; a carbon atom to which $R^9$ or $R^{10}$ is bonded may be linked to either a carbon atom to which $R^{13}$ is bonded or a carbon atom to which $R^{11}$ is bonded directly or by way of an alkylene group of 1 to 3 carbon atoms; and when each of m and n is 0, $R^{15}$ and $R^{12}$, or $R^{15}$ and $R^{19}$ may be bonded to each other to form a monocyclic or polycyclic aromatic ring.

**13.** The process for preparing cycloolefin random copolymer pellets as claimed in claim 12, wherein the cycloolefin random copolymer is preheated to a temperature of not lower than 50 °C and fed to the extruder.

**14.** The process for preparing cycloolefin random copolymer pellets as claimed in claim 12 or 13, wherein the number of cyclohexane-insoluble cycloolefin random copolymer fine particles having a particle diameter of not less than 1 μm contained in 30 mg of the resulting cycloolefin random copolymer pellets is not more than 60,000.

**15.** A process for preparing cycloolefin random copolymer pellets, comprising feeding a cycloolefin random copolymer to an extruder, said copolymer being obtained by copolymerizing (a) ethylene and (b) at least one cycloolefin represented by the following formula [I] or [II] and having a softening temperature (TMA) of not lower than 70 °C, and extruding the cycloolefin random copolymer in the molten state from the extruder, wherein:

the cycloolefin random copolymer pellets extruded from the extruder are dried and/or mixed in such a manner that the amount of a fine powder produced from the pellets in the drying and/or the mixing is not more than 100 ppm;

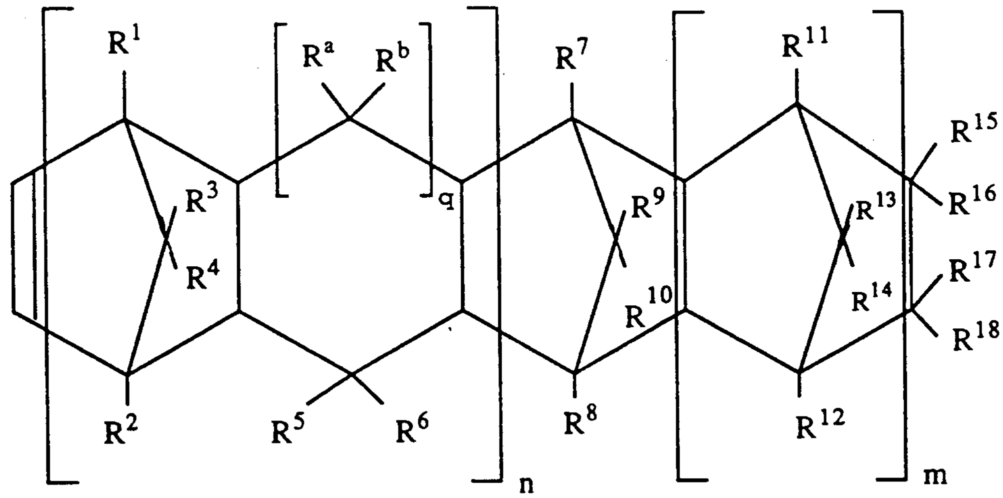

... [I]

wherein n is 0 or 1; m is 0 or a positive integer; q is 0 or 1; $R^1$ to $R^{18}$, and $R^a$ and $R^b$ are each independently an atom or a group selected from the group consisting of a hydrogen atom, a halogen atom and a hydrocarbon group; $R^{15}$ to $R^{18}$ may be bonded to each other to form a monocyclic or polycyclic ring which may have a double bond; and $R^{15}$ and $R^{16}$, or $R^{17}$ and $R^{18}$ may form together an alkylidene group;

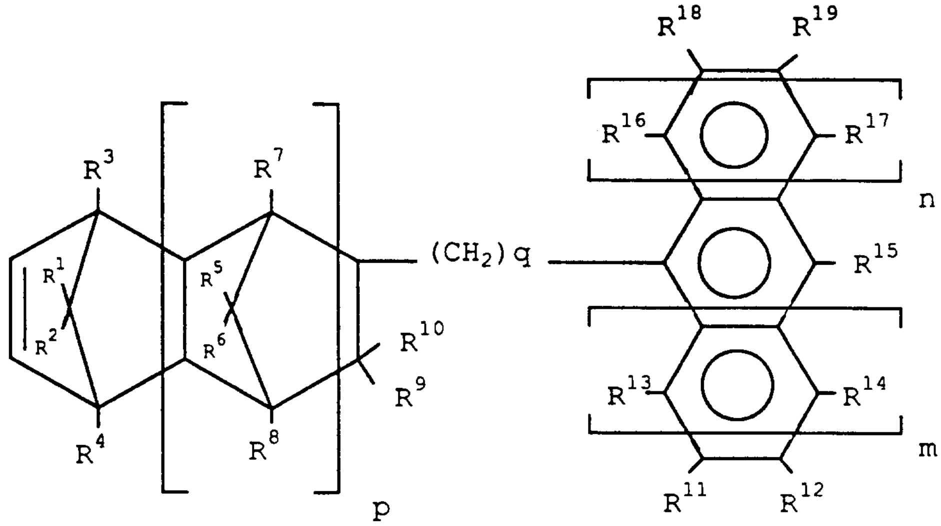

... [II]

wherein each of p and q is 0 or a positive integer; each of m and n is 0, 1 or 2; $R^1$ to $R^{19}$ are each independently a hydrogen atom, a halogen atom, a hydrocarbon group or an alkoxy group; a carbon atom to which $R^9$ or $R^{10}$ is bonded may be linked to either a carbon atom to which $R^{13}$ is bonded or a carbon atom to which $R^{11}$ is bonded directly or by way of an alkylene group of 1 to 3 carbon atoms; and when each of m and n is 0, $R^{15}$ and $R^{12}$, or $R^{15}$ and $R^{19}$ may be bonded to each other to form a monocyclic or polycyclic aromatic ring.

**16.** The process for preparing cycloolefin random copolymer pellets as claimed in claim 15, wherein the number of cyclohexane-insoluble cycloolefin random copolymer fine particles having a particle diameter of not less than 1 $\mu$m contained in 30 mg of the resulting cycloolefin random copolymer pellets is not more than 60,000.

**17.** A process for preparing cycloolefin random copolymer pellets, comprising feeding a cycloolefin random copolymer to an extruder, said copolymer being obtained by copolymerizing (a) ethylene and (b) at least one cycloolefin represented by the following formula [I] or [II] and having a softening temperature (TMA) of not lower than 70 °C, and extruding the cycloolefin random copolymer in the molten state from the extruder, wherein:

the cycloolefin random copolymer preheated to a temperature of not lower than 50 °C is fed to a twin-screw extruder in which the cylinder temperature at the starting position of the melt zone is set to be higher by not lower than 90 °C than the glass transition temperature (Tg) of the copolymer fed to the extruder, the temperature at the starting position of the melt zone is set to be higher than other zones of the extruder and the rotation directions of the two screws are the same as each other, then the copolymer in the molten state is extruded from the extruder, thereafter allowed to pass through a polymer filter while a difference in the pressure between before and behind the polymer filter is adjusted to not more than 90 kg/cm$^2$, and pelletized, followed by drying and/or mixing the resulting cycloolefin random copolymer pellets in such a manner that the amount of a fine powder produced from the pellets is not more than 100 ppm;

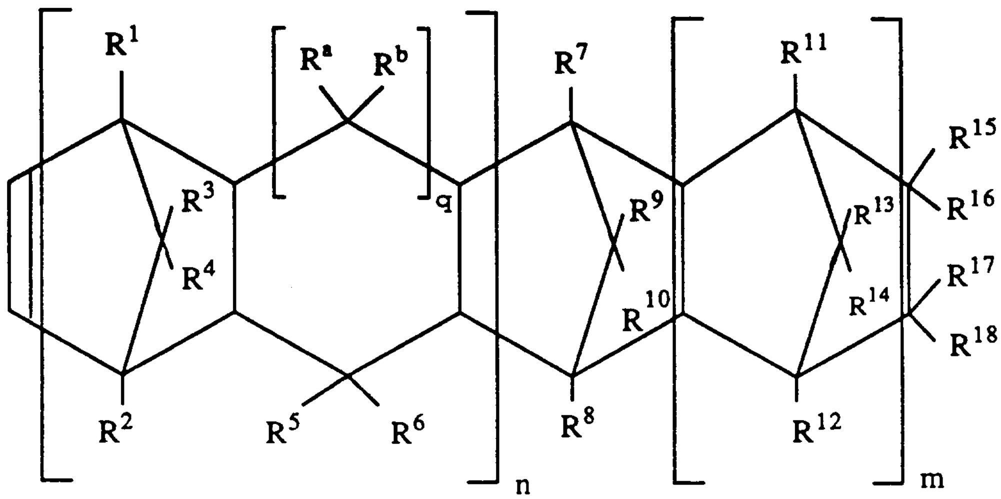

... [I]

wherein n is 0 or 1; m is 0 or a positive integer; q is 0 or 1; $R^1$ to $R^{18}$, and $R^a$ and $R^b$ are each independently an atom or a group selected from the group consisting of a hydrogen atom, a halogen atom and a hydrocarbon group; $R^{15}$ to $R^{18}$ may be bonded to each other to form a monocyclic or polycyclic ring which may have a double bond; and $R^{15}$ and $R^{16}$, or $R^{17}$ and $R^{18}$ may form together an alkylidene group;

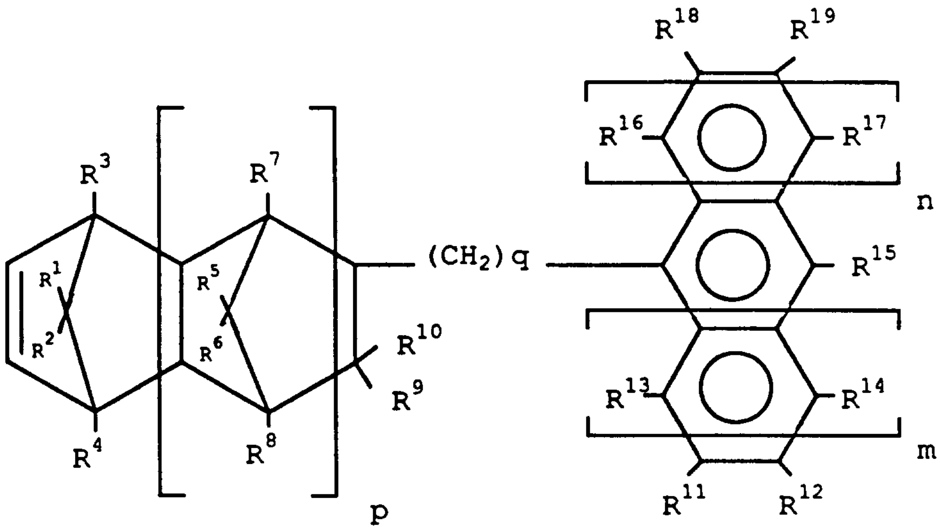

... [II]

wherein each of p and q is 0 or a positive integer; each of m and n is 0, 1 or 2; $R^1$ to $R^{19}$ are each independently a hydrogen atom, a halogen atom, a hydrocarbon group or an alkoxy group; a carbon atom to which $R^9$ or $R^{10}$ is bonded may be linked to either a carbon atom to which $R^{13}$ is bonded or a carbon atom to which $R^{11}$ is bonded directly or by way of an alkylene group of 1 to 3 carbon atoms; and when each of m and n is 0, $R^{15}$ and $R^{12}$, or $R^{15}$ and $R^{19}$ may be bonded to each other to form a monocyclic or polycyclic aromatic ring.

**18.** The process for preparing the cycloolefin copolymer pellets as claimed in claim 17, wherein the number of cyclohexane-insoluble cycloolefin random copolymer fine particles having a particle diameter of not less than 1 μm contained in 30 mg of the resulting cycloolefin random copolymer pellets is not more than 60,000.

*Fig. 1*

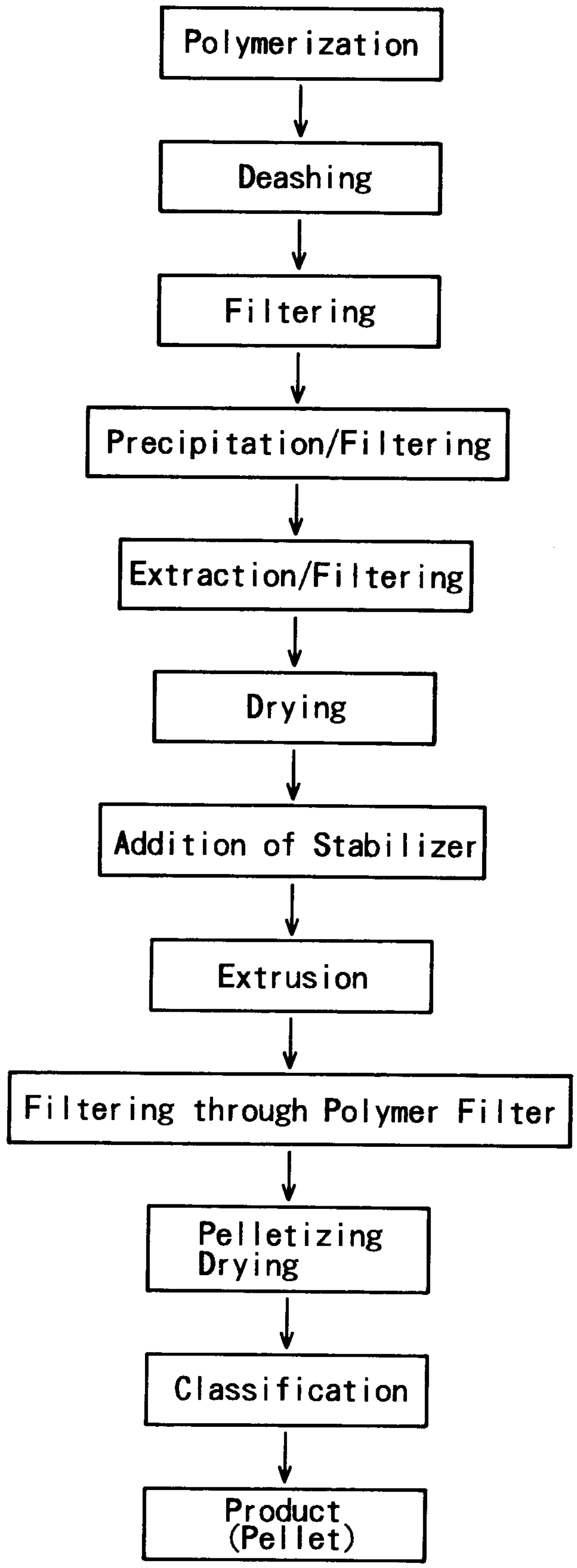
Polymerization
Deashing
Filtering
Precipitation/Filtering
Extraction/Filtering
Drying
Addition of Stabilizer
Extrusion
Filtering through Polymer Filter
Pelletizing
Drying
Classification
Product
(Pellet)

Fig. 2

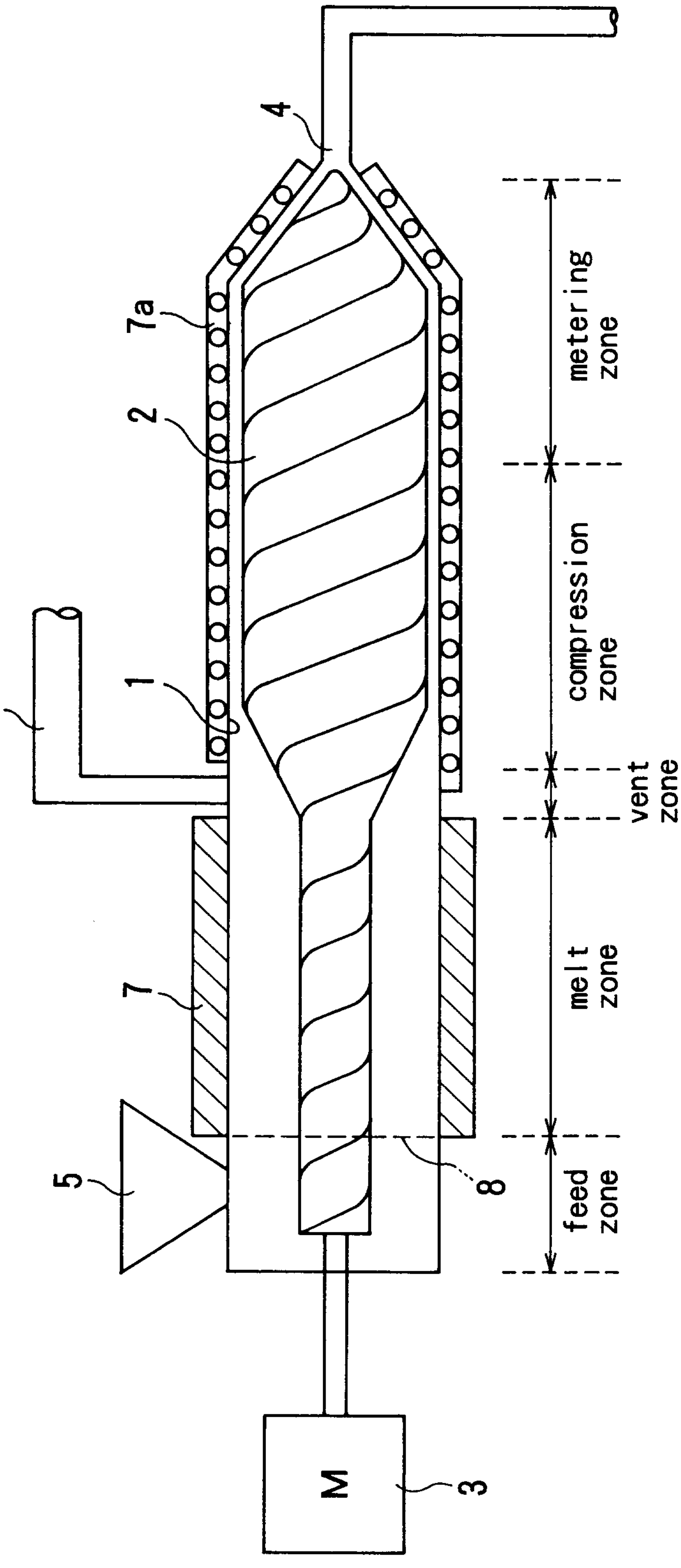
4
7a
2
1
6
7
5
8
3
M
metering zone
compression zone
vent zone
melt zone
feed zone

Fig. 3

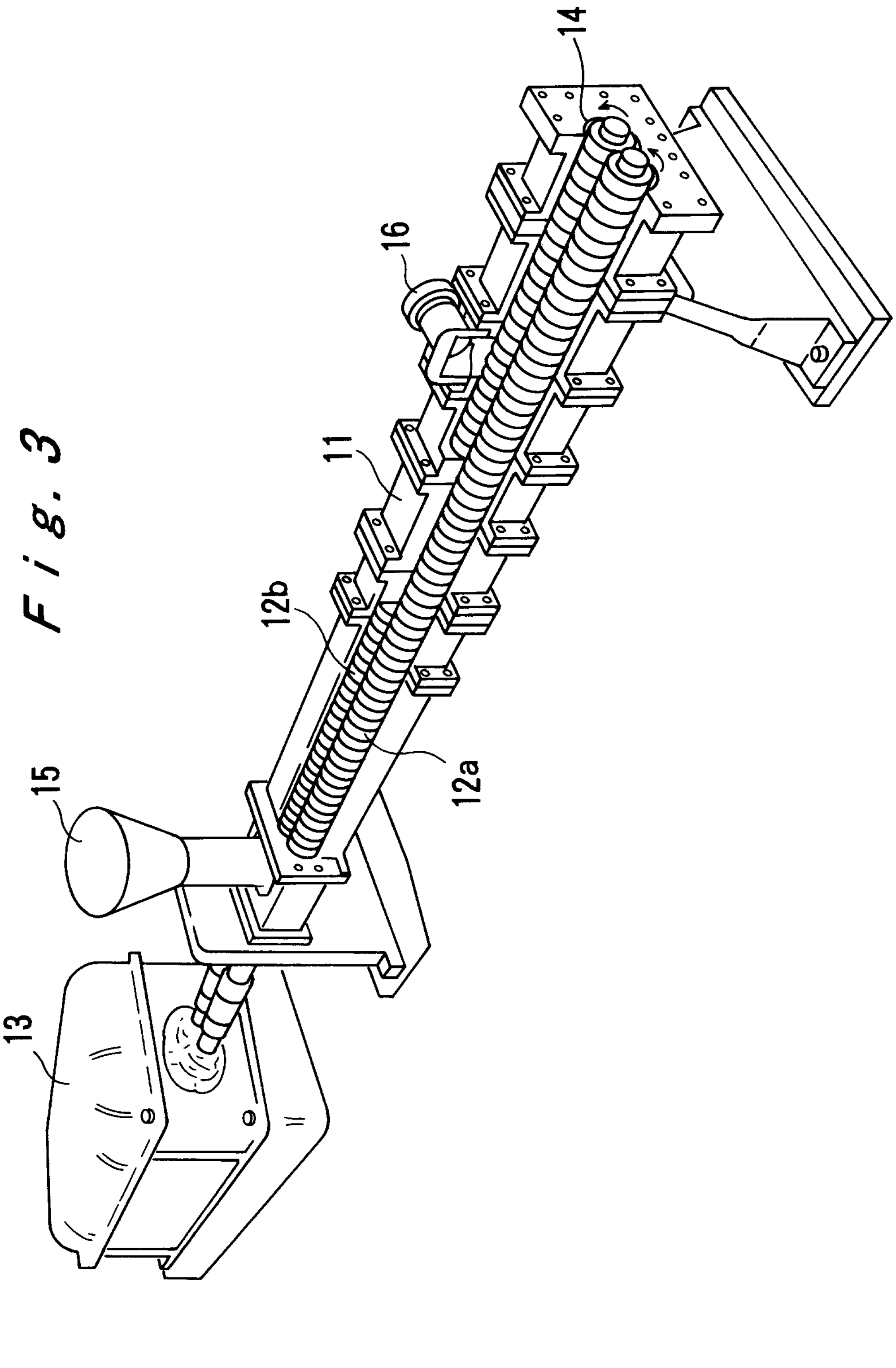

*Fig. 4*

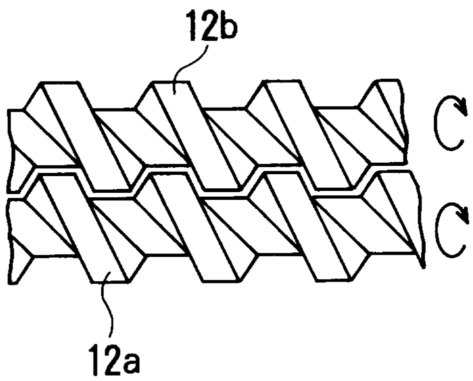

**INTERNATIONAL SEARCH REPORT**

International application No.
PCT/JP94/00088

A. CLASSIFICATION OF SUBJECT MATTER
Int. $Cl^5$ C08J3/12, B29B9/06, B29B9/12, B29B13/06

According to International Patent Classification (IPC) or to both national classification and IPC

B. FIELDS SEARCHED

Minimum documentation searched (classification system followed by classification symbols)
Int. $Cl^5$ C08J3/12, B29B9/06, B29B9/12, B29B13/06, C08F210/02, C08F232/08

Documentation searched other than minimum documentation to the extent that such documents are included in the fields searched
Jitsuyo Shinan Koho 1926 - 1992
Kokai Jitsuyo Shinan koho 1971 - 1992

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP, B2, 4-14685 (Mitsui Petrochemical Industries, Ltd.), March 13, 1992 (13. 03. 92), Claim 1, lines 29 to 36, left column, page 4 & EP, A1, 156464 | 1-17 |
| A | JP, B2, 3-46002 (Mitsui Petrochemical Industries, Ltd.), July 12, 1991 (12. 07. 91), Claim 1, lines 12 to 19, left column, page 4, (Family: none) | 1-17 |
| A | JP, A, 57-107827 (Nakatani Kikai K.K.), July 5, 1982 (05. 07. 92), Claim 1, line 19, lower right column, page 1 to line 3, upper right column, page 2, Fig. 2, (Family: none) | 2-5, 17 |
| A | JP, A, 1-97615 (Warnar-Lambert Co.), April 17, 1989 (17. 04. 89), Claim 1, lines 6 to 9, upper right column, | 6, 7, 17 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| February 9, 1994 (09. 02. 94) | March 1, 1994 (01. 03. 94) |
| Name and mailing address of the ISA/ Japanese Patent Office | Authorized officer |
| Facsimile No. | Telephone No. |

**INTERNATIONAL SEARCH REPORT**

International application No.
PCT/JP94/00088

C (Continuation). DOCUMENTS CONSIDERED TO BE RELEVANT

| Category* | Citation of document, with indication, where appropriate, of the relevant passages | Relevant to claim No. |
|---|---|---|
| | page 3, lines 5 to 11, lower left column to lines 2 to 7, lower right column, page 3 & EP, A2, 304401 | |
| A | JP, A, 4-189106 (Monsanto Kasei Co.), July 7, 1992 (07. 07. 92) Claims 1 and 2, (Family: none) | 8-11, 17 |
| A | JP, A, 59-115825 (Mitsubishi Heavy Industries, Ltd.), July 4, 1984 (04. 07. 84), Claim, lines 9 to 18, upper left column, page 3, (Family: none) | 12-14 17 |
| A | JP, A, 2-225007 (Sanyo Electric Co., Ltd.), September 7, 1990 (07. 09. 90), Claim, line 15, upper right column to line 1, upper left column, page 7, (Family: none) | 15-17 |